# EUROPÄISCHE PATENTSCHRIFT

(11) **EP 2 411 692 B1**
(45) Veröffentlichungstag und Bekanntmachung des Hinweises auf die Patenterteilung: **14.10.2015**
(21) Anmeldenummer: 10711351.6
(22) Anmeldetag: 29.03.2010
(51) Int. Cl.: F16D 23/06

(54) **SYNCHRONISATIONSEINHEIT EINES GETRIEBES**
GEARBOX SYNCHRONIZATION UNIT
UNITÉ DE SYNCHRONISATION D'UNE TRANSMISSION

(30) Priorität: 27.03.2009 DE 202009004322 U; 26.01.2010 DE 102010005705
(43) Veröffentlichungstag der Anmeldung: 01.02.2012
(73) Patentinhaber: Hoerbiger Antriebstechnik Holding GmbH, 86956 Schongau (DE)
(72) Erfinder: BINDER, Jürgen, 88367 Hohentengen (DE); LEDETZKY, Erol, 74074 Heilbronn (DE); SCHNELZER, Thomas, 86971 Peiting (DE)
(74) Vertreter: Prinz & Partner mbB
(86) Internationale Anmeldenummer: PCT/EP2010/001982
(87) Internationale Veröffentlichungsnummer: WO 2010/108697

(56) Entgegenhaltungen:
- EP-A1- 0 743 466
- DE-A1- 2 706 661
- DE-A1- 3 421 542
- DE-A1-102010 005 705
- DE-U- 1 819 678
- US-A1- 2003 111 313

## Beschreibung

Die Erfindung betrifft eine Synchronisationseinheit eines Getriebes, mit den Merkmalen im Oberbegriff des Anspruchs 1.

Die DE 20 2009 004 325 U1 offenbart eine Synchronisationseinheit, bei der sich ein Synchronstein der Vorsynchroneinheit direkt auf einem Reibkonus des Synchronrings abstützt.

Die erfindungsgemäße Synchronisationseinheit wird auch als Sperrsynchronisationseinheit bezeichnet, denn sie verhindert, dass die Schaltmuffe vor dem Drehzahlangleich des Synchronkörpers mit dem zu koppelnden Gangrad axial auf dieses Gangrad aufgeschoben werden kann.

Im Stand der Technik ergibt sich das Problem, dass die Synchronringe eine axiale Bewegungsfreiheit in Richtung zum Gangrad aufweisen oder sogar durch eine radiale Vorspannung der Vorsynchroneinheit axial gegen ein dem Synchronring zugeordnetes Gangrad beaufschlagt ist. In der sogenannten nicht-geschalteten Neutralstellung des Getriebes kann es deshalb bei einer entsprechenden axialen Bewegung des Synchronrings zu einem unerwünschten Kontakt zwischen dem Synchronring und einer Reibfläche des Gangrads kommen, was zu unerwünschten Schleppmomenten führt. Diese reduzieren den Wirkungsgrad des Getriebes.

Die DE 27 06 661 A1 zeigt eine gattungsgemäße Synchronisationseinheit mit Sperrstücken, welche die Synchronringe zu einer in axialer Richtung gemeinsam verschiebbaren Einheit verbinden.

Aufgabe der Erfindung ist es, mit geringem Aufwand eine Synchronisationseinheit zu schaffen, welche in einer Neutralstellung des Getriebes ein verringertes Schleppmoment sowie eine axiale Mittenarretierung der Vorsynchroneinheit und der Schaltmuffe sicherstellt.

Erfindungsgemäß wird diese Aufgabe durch eine Synchronisationseinheit mit den Merkmalen des Anspruchs 1 gelöst.

Durch die Erfindung werden der oder die Synchronringe in Axialrichtung eindeutig positioniert, so dass Schleppmomente reduziert oder vermieden werden. Diese Verbesserung betrifft auch Synchronisationseinheiten mit nur einem Gangrad und einem Synchronisationsring. Die Erfindung schafft eine definierte Mittenzentrierung des Synchronisationsrings/-ringe in der Neutralstellung über Formschluss.

Gemäß der Erfindung sind zwei axial gegenüberliegende Synchronringe zur Kopplung des Synchronkörpers mit wahlweise einem von zwei Gangrädern des Getriebes über eine Reibverbindung vorgesehen. Die Vorsynchroneinheit koppelt die beiden Synchronringe in Axialrichtung zur gemeinsamen Axialverschiebung formschlüssig miteinander. Die formschlüssige Kopplung der beiden Synchronringe durch die Vorsynchroneinheit ist insbesondere so ausgebildet, dass die Synchronringe ein durch die Vorsynchroneinheit begrenztes oder kein axiales Spiel aufweisen, das unabhängig von einer Position der Vorsynchroneinheit oder der Synchronringe in Umfangsrichtung, insbesondere von deren Relativposition in Umfangsrichtung ist.

Die Kopplung der Synchronringe über die Vorsynchroneinheit ist vorteilhafterweise so ausgebildet, dass der Abstand der Synchronringe voneinander unabhängig von der relativen Umfangsposition der Ringe zur Vorsynchroneinheit gleich ist.

Vorzugsweise sind zwischen der Vorsynchroneinheit und den beiden Synchronringen sogar axial weitgehend spielfreie Formschlussverbindungen ausgebildet, so dass die Synchronringe im Wesentlichen starr und ohne axiales Spiel miteinander gekoppelt sind.

Diese Kopplung durch die Vorsynchroneinheit sorgt dafür, dass der Synchronring, welcher dem nicht zu koppelnden Gangrad zugeordnet ist, bei der

Bewegung in Gegenrichtung vom Konus seines Gangrads weiter entfernt wird, sodass keine Schleppmomente auftreten. Auch in der nicht-geschalteten Neutralstellung kann keiner der Synchronringe nach außen in Richtung auf den Konus des Gangrades gedrückt werden, wenn die Mittenstellung der Vorsynchroneinheit erreicht wird. Über die gebildete Einheit wird eine sogenannte axiale Mittenzentrierung und eine sogenannte Zwangslüftung und Rückstellung der Synchronringe erreicht.

Die erfindungsgemäße Synchronisationseinheit mit der formschlüssigen Kopplung der Synchronringe über die Vorsynchroneinheit wird insbesondere und vorzugsweise mit sperrverzahnungsfreien Synchronringen eingesetzt. Bei der Verwendung von sperrverzahnungsfreien Synchronringen kann die Vorsynchroneinheit beispielsweise einen oder mehrere Sperrsteine umfassen, wobei die Sperrsteine eine Sperrverzahnung aufweisen, die eine Axialbewegung der Schaltmuffe relativ zum Sperrstein freigeben oder sperren kann. Die Sperrverzahnung ist bei dieser besonderen Synchronisationsart nicht wie bei der sogenannten Borg-Warner-Synchronisation an den Synchronringen ausgebildet, sondern an dem sogenannten Sperrstein. Der Sperrstein ist in einer Ausnehmung im Synchronkörper aufgenommen und weist in der Neutralstellung seitlich neben der Schaltmuffe liegende Zähne auf, die ein Axialverschieben der Schaltmuffe über die Zähne hinaus erst bei Erreichen der Synchronisationsdrehzahl erlauben. Während des Synchronvorgangs wird die axiale Schaltkraft über die Schaltmuffe - zuerst in den Sperrstein und von diesem in den zur Kraftübertragung heranzuziehenden Synchronring eingeleitet, wodurch der Synchronring axial auf das zugeordnete Gangrad geschoben wird. Da die Sperrsteine üblicherweise über Federelemente radial nach innen permanent vorgespannt sind, drücken sie über ihre im Axialschnitt gesehen V-förmige Innenkontur die beiden innenseitig anliegenden Synchronringe nach außen gegen die Gangräder, sodass ein Schleppmoment auftreten würde. Dies wird durch die Erfindung verhindert, da eine Bewegung der beiden Synchronringe in entgegengesetzte Richtungen über die Vorsynchroneinheit vollständig oder weitgehend verhindert wird.

Gemäß der bevorzugten Ausführungsform koppelt die Vorsynchroneinheit die Synchronringe in Axialrichtung und/oder in Umfangsrichtung im Wesentlichen spielfrei miteinander. Dadurch werden Klappergeräusche zwischen der Vorsynchroneinheit und den Synchronringen vermieden, was zu einem besonders geräuscharmen Betrieb der Synchronisationseinheit beiträgt. Natürlich kann es im Rahmen der Herstellungstoleranzen zu minimalem Spiel kommen, das in diesem Zusammenhang jedoch zu vernachlässigen wäre.

Die Kopplung der beiden Synchronringe erfolgt über ein oder mehrere am Umfang verteilte Bauteile der Vorsynchroneinheit. Gemäß der Erfindung sind diese Bauteile starr, das heißt im Betrieb nicht-federnd ausgeführt. Dies verhindert selbst bei hoher Belastung oder hohen Drehzahlen ein Abweichen der Synchronringe von ihrer sogenannten gelüfteten Mittelstellung. In axialer Richtung ist das koppelnde Bauteil ungeteilt und erstreckt sich von einem Synchronring zum gegenüberliegenden, anderen Synchronring.

Das oder die die Synchronringe koppelnden Bauteile sind in einer zugeordneten Ausnehmung im Synchronkörper untergebracht. Der Synchronkörper hat folglich ein oder mehrere am Umfang verteilte Ausnehmungen zur Unterbringung der Vorsynchroneinheiten.

Das koppelnde Bauteil hat an seinen axialen Hälften radial einwärts gerichtete Fortsätze, die an den Synchronringen angreifen, insbesondere in Ausnehmungen der Synchronringe. Hierdurch wird der Formschluss erzielt. Natürlich kann auch eine umgekehrte Bauweise eingesetzt werden, mit Fortsätzen an den Synchronringen und Ausnehmungen am koppelnden Bauteil.

Ein Beispiel für eine formschlüssige Kopplung besteht darin, dass zumindest ein Synchronring wenigstens eine abstehende Klaue hat, die das koppelnde Bauteil erfasst. Vorzugsweise sind es dabei zwei aufeinander zugewandte L-förmige Klauen, zwischen denen ein Fenster gebildet wird, durch das sich ein Abschnitt des koppelnden Bauteils erstreckt, um darin aufgenommen zu werden und den Formschluss zu erzielen.

Beim Synchronisationsvorgang gibt es eine erste Phase, die sogenannte Vorsynchronisation. Hier wird der Synchronring auf sein zugeordnetes Gangrad geschoben, und aufgrund des Drehzahlunterschiedes zwischen dem Synchronring und dem Gangrad kommt es zu einem sogenannten Umschlagen des Synchronrings mit oder ohne Vorsynchroneinheit in Umfangsrichtung.

Gemäß einer ersten Ausführungsform ist es das koppelnde Bauteil, welches in Umfangsrichtung an dem Synchronkörper zur Begrenzung des Umschlagwinkels beim Synchronisieren anschlägt.

Eine zweite Ausführungsform sieht vor, dass die Synchronringe über Anschläge in Umfangsrichtung an dem Synchronkörper zur Begrenzung des Umschlagwinkels beim Synchronisieren anschlagen. Bei dieser zweiten Ausführungsform ist die Belastung des oder der koppelnden Bauteile geringer, denn sie schlagen nicht direkt am Synchronkörper an.

Erfindungsgemäß weist die Vorsynchroneinheit wenigstens ein Federelement auf, welches das koppelnde Bauteil radial einwärts beaufschlagt. Über dieses Federelement kann eine axiale Neutralstellung der Vorsynchroneinheit und damit auch der Synchronringe definiert werden.

In diesem Zusammenhang wird bevorzugt ein über das Federelement radial nach außen beaufschlagtes Kraftübertragungselement, zum Beispiel eine Kugel oder ein Sperrstein, eingesetzt, welches in eine Nut an der Schaltmuffe eingreift und die Axialverschiebung der Schaltmuffe in die Vorsynchroneinheit einleitet.

In einer alternativen Ausführungsform der Synchronisationseinheit weisen die Synchronringe eine Sperrverzahnung auf, die eine Axialbewegung der Schaltmuffe zum Gangrad hin freigeben oder sperren kann. Somit lässt sich die vorteilhafte Schleppmomentverringerung und Mittenarretierung gemäß der Erfindung auch bei Schaltgetrieben mit einem herkömmlichen Sperrmechanismus nach Borg-Warner einsetzen.

In einer anderen Ausführungsform der Synchronisationseinheit umfasst die Vorsynchroneinheit eine Sperrverzahnung, die eine Axialbewegung der Schaltmuffe zum Gangrad hin freigeben oder sperren kann. Durch die Ausbildung der Sperrverzahnung an der Vorsynchroneinheit kann am Synchronring auf eine Sperrverzahnung verzichtet werden, wodurch sich der Synchronring deutlich einfacher und preiswerter herstellen lässt.

In einer weiteren Ausführungsform ist die Vorsynchroneinheit eine Sperrkeilsynchronisationsbaugruppe, mit einem Synchronstein, der sich in radialer Richtung am Synchronring abstützt, einem Federelement, das sich am Synchronstein abstützt, und einem Sperrstein, der durch das Federelement radial gegen die Schaltmuffe beaufschlagt ist, wobei der Sperrstein eine Axialbewegung der Schaltmuffe zum Gangrad hin freigeben oder sperren kann. Eine solche Sperrkeilsynchronisationsbaugruppe ist aus der DE 10 2007 010 307 B3 bekannt, auf die explizit verwiesen wird. Bei dieser Konstruktion der Synchronisationseinheit kann sowohl auf eine Sperrverzahnung am Synchronring als auch auf eine Sperrverzahnung an der Vorsynchroneinheit verzichtet werden. Somit lässt sich auch diese Synchronisationseinheit besonders einfach und kostengünstig herstellen.

Es sind verschiedene Ausführungsformen denkbar, wie der nicht zum Schalten dienende, mitgenommene Synchronring axial aufgrund der Bewegung der Vorsynchroneinheit bewegt wird. Die bevorzugte Ausführungsform der Erfindung sieht vor, dass eine Kontaktfläche am koppelnden Bauteil und eine gegenüberliegende Gegenfläche am Synchronring einander beim Mitnehmen kontaktieren. Diese Flächen liegen vorzugsweise im Wesentlichen senkrecht zur axialen Richtung, minimal jedoch 60 Grad zur axialen Richtung (oder maximal 30° zur Radialebene der Axialrichtung. Damit soll verhindert werden, dass beim Mitnehmen über Keilflächen eine Kippbewegung auf das koppelnde Bauteil ausgeübt wird.

Alternativ hierzu sind jedoch Schrägflächen vorgesehen, die so ausgebildet sind, dass die Vorsynchroneinheit für jeden Synchronring eine Kontaktfläche aufweist und sich über diese Kontaktfläche an einer Gegenfläche des Synchronrings in radialer Richtung abstützt. Die Kontaktfläche und die Gegenfläche sind gegenüber einer axialen Richtung so geneigt, dass sich in axialer Richtung vom Synchronkörper zum Gangrad hin gesehen ihr radialer Abstand zu einer Getriebeachse verringert. Das bedeutet, die jeweilige Fläche am Synchronkörper läuft zu dem ihr zugeordneten freien axialen Ende radial nach innen, sodass eine Art Fortsatz gebildet wird, der der Mitnahme dient. Bei dieser Variante ist ein axiales Spiel zwischen den Synchronringen und dem koppelnden Bauteil möglich. Mit einer derartig geneigten Kontakt- bzw. Gegenfläche ist eine axiale Bewegung des Synchronrings in Richtung zu seinem zugeordneten Gangrad deutlich erschwert, wodurch unerwünschte Schleppmomente seltener auftreten und/oder betragsmäßig kleiner ausfallen. Dies trägt insgesamt zu einem besseren Wirkungsgrad des Getriebes und damit zu einer effizienteren Energienutzung bei, was sowohl ökonomisch als auch ökologisch vorteilhaft ist.

Kontaktfläche und Gegenfläche sollten hierbei vorzugsweise parallel sein, so dass sich die Vorsynchroneinheit flächig am Synchronring abstützt. Daraus resultiert eine geringere Materialbeanspruchung im Bereich der Kontaktstelle, was sich entsprechend positiv auf die Verschleißerscheinungen an den beteiligten Bauteilen auswirkt.

In einer Ausführungsform umfasst die Vorsynchroneinheit ein koppelndes Bauteil, an dem die Kontaktfläche ausgebildet ist, sowie ein Federelement, welches das koppelnde Bauteil radial gegen den Synchronring beaufschlagt. Infolge der geneigten Kontakt- und Gegenfläche entsteht durch die radial ausgerichtete Federkraft eine axiale Kraftkomponente im Synchronring, welche den Synchronring axial vom zugeordneten Gangrad weg beaufschlagt. Somit trägt die Federkraft unmittelbar zu einer Minimierung der im Getriebe auftretenden Schleppmomente bei.

Vorzugsweise sind die Kontaktfläche und deren Gegenfläche in einem axialen Längsschnitt der Synchronisationseinheit als gerade Schnittlinien sichtbar, die mit der Axialrichtung einen Winkel α einschließen. Dieser Winkel α bestimmt die Größe der Axialkraftkomponente, welche beim radialen Abstützen der Vorsynchroneinheit in den Synchronring eingeleitet wird. Der Winkel α liegt vorzugsweise in einer Größenordnung von etwa 5° bis 20°, besonders bevorzugt bei 10° bis 15°.

Bevorzugt weisen die Vorsynchroneinheit und der Synchronring einander zugeordnete Anschlagflächen zur Begrenzung einer axialen Relativbewegung auf.

Darüber hinaus können der Synchronkörper und der Synchronring ebenfalls einander zugeordnete Anschlagflächen zur Begrenzung einer axialen Relativbewegung aufweisen. Zusammen mit der durch die Neigung der Kontakt- und Gegenflächen verursachten Axialkraftkomponente auf den Synchronring führen diese einander zugeordneten Anschlagflächen einerseits zu einer axialen Mittenarretierung der Vorsynchroneinheit und andererseits zu einer definierten "Entlüftungsstellung" des Synchronrings. Als Entlüftungsstellung des Synchronrings wird dabei eine axiale Synchronringposition bezeichnet, in der eine Reibfläche des Synchronrings von einer Reibfläche des Gangrads beabstandet ist, sodass sich "Luft" zwischen den Reibflächen befindet. Demzufolge treten in einer solchen Entlüftungsstellung des Synchronrings keine unerwünschten Schleppmomente, insbesondere hervorgerufen durch Schmier- und Kühlstoffe, im Getriebe auf.

An einem dem zugeordneten Gangrad zugewandten axialen Ende des Synchronrings kann ein in Richtung zum Synchronkörper abgewinkelter Abschnitt angeformt sein, der die Gegenfläche zum Abstützen der Vorsynchroneinheit aufweist. Ausgehend von herkömmlichen Synchronringen, wie sie beispielsweise bei sogenannten Borg-Warner-Synchronisierungen zum Einsatz kommen, sind bei dieser Konstruktion nur geringfügige konstruktive und fertigungstechnische Anpassungen notwendig, um eine vorteilhafte Reduktion der Schleppmomente zu erreichen.

Für den Fall, dass der Synchronring eine Sperrverzahnung aufweist, ist diese Sperrverzahnung dabei vorzugsweise in Umfangsrichtung gesehen im Bereich der abgewinkelten Abschnitte unterbrochen.

Die Vorsynchroneinheit, insbesondere das koppelnde Bauteil, und die Synchronringe können einander zugeordnete Anschlagflächen an einem axial zwischen die Synchronringe ragenden, zentralen Fortsatz der Vorsynchroneinheit aufweisen. Dieser dient zur Begrenzung der axialen Relativbewegung der Synchronringe. Jeder Synchronring liegt also in axialer Richtung zwischen dem zentralen Fortsatz und einem weiteren Anschlag der Vorsynchroneinheit und wird dadurch in beiden axialen Richtungen an der Vorsynchroneinheit fixiert. Der zentrale Fortsatz dient nicht nur dazu, ein Aufeinanderzubewegen der Synchronringe zu verhindern, sondern er kann auch dazu dienen, den zu schaltenden Synchronring axial gegen sein Gangrad zu bewegen.

Die Vorsynchroneinheit sollte vom Synchronkörper radial beabstandet sein, so dass kein Kontakt zwischen der Vorsynchroneinheit und dem Synchronkörper vorhanden ist. Dies ermöglicht ein ungehindertes, reibungsfreies "Umschlagen" der Vorsynchroneinheit, das heißt eine Bewegung der Vorsynchroneinheit relativ zum Synchronkörper in Umfangsrichtung.

In einer Ausführungsform der Synchronisationseinheit weisen die Synchronringe jeweils eine radiale Außenseite auf, die sich in axialer Richtung vom Synchronkörper zum zugeordneten Gangrad hin gesehen zunächst radial aufweitet und dann radial verjüngt oder umgekehrt. Diese Konstruktion ermöglicht eine besonders einfache Fertigung des Synchronrings.

Die beiden Synchronringe können in einer nicht-geschalteten Neutralstellung des Getriebes durch die Vorsynchroneinheit axial aufeinander zu beaufschlagt sein, um einer Bewegung nach außen entgegenzuwirken. Diese vorteilhafte Beaufschlagung der Synchronringe in ihre "entlüfteten" Stellungen lässt sich mit geringem Aufwand beispielsweise dadurch realisieren, dass die Vorsynchroneinheit eine radiale Vorspannung sowie für jeden Synchronring wenigstens eine Kontaktfläche aufweist, die in geeigneter Weise geneigt ist.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine Explosionsansicht einer ersten Ausführungsform der erfindungsgemäßen Synchronisationseinheit sowie zweier gegenüberliegender Gangräder gemäß einer ersten Ausführungsform,
- Figur 2 eine Längsschnittansicht durch die Synchronisationseinheit samt der Gangräder nach Figur 1,
- Figur 3 eine vergrößerte Detailansicht im Längsschnitt im Bereich eines sogenannten Sperrsteins,
- Figur 4 eine Explosionsansicht durch eine erfindungsgemäße Synchronisationseinheit gemäß einer zweite Ausführungsform,
- Figur 5 eine Längsschnittansicht der Synchronisationseinheit nach Figur 4,
- Figur 6 eine perspektivische Detailansicht des Sperrsteins, der bei einer gegenüber der Ausführungsform nach Figur 4 leicht modifizierten Variante eingesetzt wird,
- Figur 7 eine Detailansicht eines modifizierten Sperrsteins, der bei der erfindungsgemäßen Synchronisationseinheit, z.B. bei der Ausführungsform nach Fig. 4 verwendet wird,
- Figur 8 eine Detailschnittansicht durch eine Synchronisationseinheit nach der Erfindung gemäß einer weiteren Ausführungsform, hier einer Sperrkeilsynchronisation,
- Figur 9 eine Detailschnittansicht durch eine weitere Synchronisationseinheit nach der Erfindung in Form einer Synchronisation, bei der die Sperrverzahnung an den Synchronringen angeformt ist,
- Figur 10 einen schematischen, axialen Längsschnitt längs der Linie X-X in Figur 12 durch ein Schaltgetriebe mit einer erfindungsgemäßen Synchronisationseinheit gemäß einer Ausführungsform in einer axial mittigen Neutralstellung;
- Figur 11 einen weiteren axialen Längsschnitt durch das Schaltgetriebe gemäß Figur 10 in einer axial ausgelenkten Stellung;
- Figur 12 einen schematischen Querschnitt längs der Linie XII-XII in Figur 10 durch ein Detail der Synchronisationseinheit gemäß Figur 10 im Bereich einer Vorsynchroneinheit in einer Freigabestellung;
- Figur 13 einen weiteren schematischen Querschnitt durch ein Detail der Synchronisationseinheit gemäß Figur 10 im Bereich einer Vorsynchroneinheit in einer Sperrstellung;
- Figur 14 einen schematischen, axialen Längsschnitt durch ein Schaltgetriebe mit einer erfindungsgemäßen Synchronisationseinheit gemäß einer anderen Ausführungsform in einer axial mittigen Neutralstellung;
- Figur 15 einen weiteren axialen Längsschnitt durch das Schaltgetriebe gemäß Figur 14 in einer axial ausgelenkten Stellung;
- Figur 16 einen schematischen, axialen Längsschnitt durch ein Schaltgetriebe mit einer erfindungsgemäßen Synchronisationseinheit gemäß einer weiteren Ausführungsform in einer axial mittigen Neutralstellung;
- Figur 17 einen schematischen, axialen Längsschnitt durch ein Schaltgetriebe mit einer erfindungsgemäßen Synchronisationseinheit gemäß noch einer Ausführungsform in einer axial mittigen Neutralstellung;
- Figur 18 eine Schnittansicht einer anderen erfindungsgemäßen Synchronisationseinheit;
- Figur 19 eine Explosionsansicht einer Ausführungsform der erfindungsgemäßen Synchronisationseinheit mit nur einem Gangrad; und
- Figur 20 eine Längsschnittansicht durch die Synchronisationseinheit samt der Gangräder nach Figur 18.

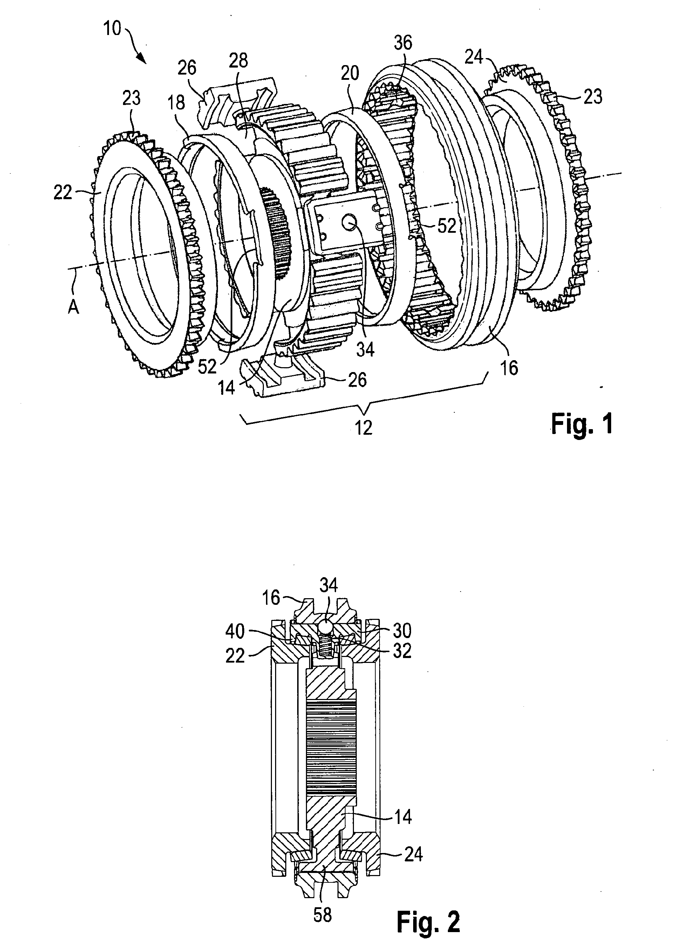

In Figur 1 ist ein Schaltgetriebe 10 eines Fahrzeugs gezeigt, mit einer Synchronisationseinheit 12, genauer gesagt einer Sperrsynchronisationseinheit. Die Synchronisationseinheit 12 umfasst einen Synchronkörper 14, der auf einer um eine Getriebeachse A rotierbaren (nicht dargestellten) Getriebewelle drehfest angebracht ist, eine Schaltmuffe 16, die relativ zum Synchronkörper 14 über eine Innenverzahnung drehfest, aber axial verschieblich angeordnet ist, sowie zwei bezüglich des Synchronkörpers 14 gegenüberliegende Synchronringe 18, 20 zur Kopplung des Synchronkörpers 14 mit zugeordneten Gangrädern 22 bzw. 24 des Schaltgetriebes über eine Reibverbindung. Die Synchronisationseinheit umfasst darüber hinaus eine Vorsynchroneinheit 26, die an der Schaltmuffe 16 angreift und bei einer Axialverschiebung der Schaltmuffe 16 entweder den Synchronring 18 oder 20 mit einer axialen Schaltkraft gegen das zu koppelnde Gangrad 22 bzw. 24 beaufschlagt.

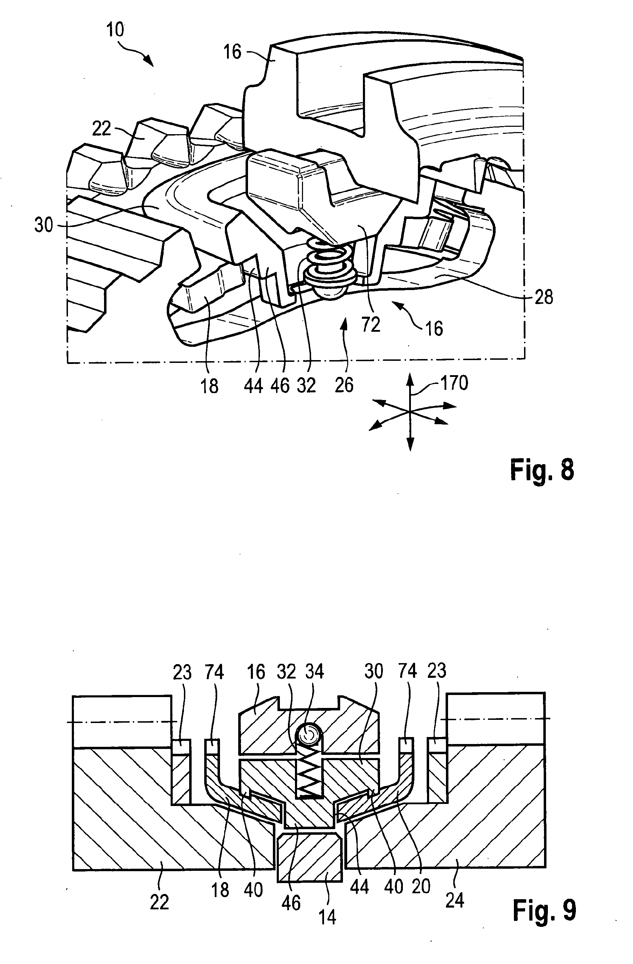

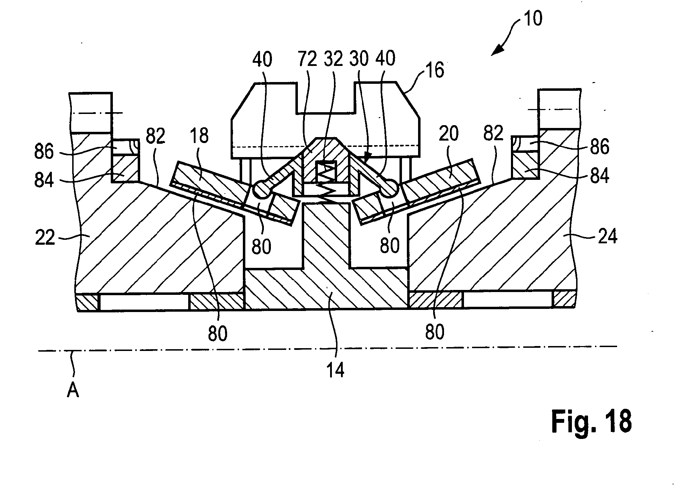

Im Übrigen gilt für diese und auch für die anschließenden Ausführungsformen, dass Gangräder einerseits die Verzahnung für die Getriebeübersetzung aufweisen und andererseits eine sogenannte Kupplungsverzahnung 23, die üblicherweise einen kleineren Teilkreis als die Getriebeverzahnung besitzt und auf die die Schaltmuffe 16 aufgeschoben werden kann. Es gibt verschiedene Alternativen, die Gangräder herzustellen. In Figur 1 ist die Kupplungsverzahnung 23 an einem Kupplungskörper ausgebildet, der einen scheibenförmigen Abschnitt und einen ringförmigen Abschnitt besitzt. Der scheibenförmige Abschnitt umfasst die Kupplungsverzahnung 23, der ringförmige Abschnitt den Reibkegel. Der Kupplungskörper ist mit dem Rest des Gangrades (ab Fig. 9 gezeigt), der die Getriebeverzahnung aufweist, drehfest verbunden, z.B. durch Schweißen. Eine hierzu alternative Ausführungsform ist in Fig. 18 gezeigt, hier besteht das Gangrad ebenfalls aus zwei Teilen, nämlich dem die Getriebeverzahnung aufweisenden Teil, welches den Reibkegel aufweist und einer daran befestigten Kupplungsscheibe 84, die die Kupplungsverzahnung 86 aufweist. Alternativ könnte natürlich auch das gesamte Gangrad22, 24 aus einem Teil gefertigt sein.

Im Folgenden werden unter dem Begriff Gangrad alle diese ein- und mehrteiligen Varianten verstanden, unabhängig davon, wie sie gezeigt sind.

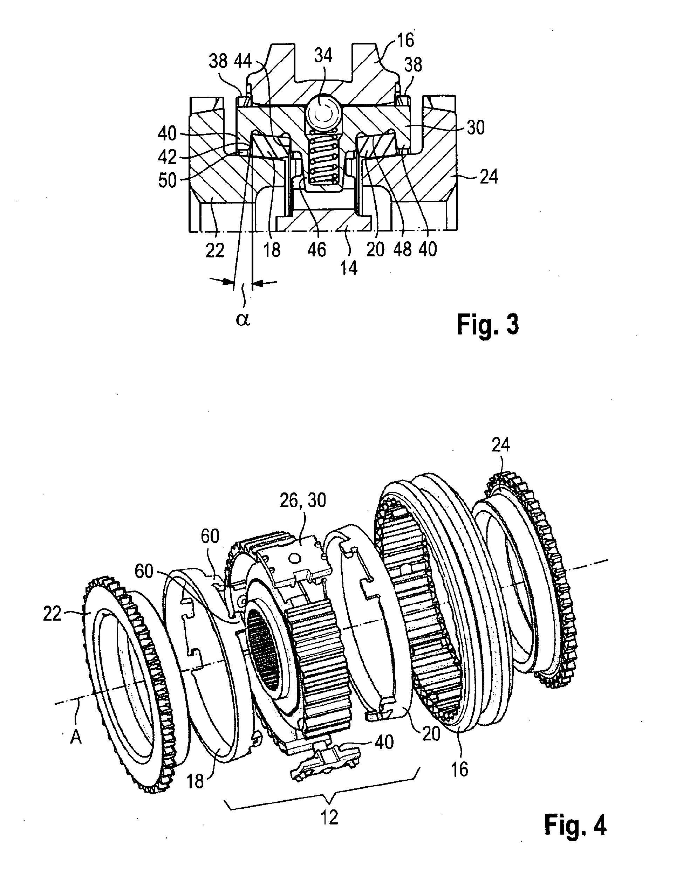

In den Fign. 1 und 4 sind Kupplungskörper gezeigt, die aber sozusagen als Platzhalter für die Baueinheit Kupplungskörper samt Gangräder 22, 24 dargestellt sind.

Im dargestellten Ausführungsbeispiel sind am Umfang des Synchronkörpers 14 gleichmäßig verteilt drei Vorsynchroneinheiten 26 angeordnet. Der Synchronkörper 14 hat an seinem Außenumfang eine Verzahnung sowie mehrere taschenförmige Ausnehmungen 28, in denen jeweils eine Vorsynchroneinheit 26 liegt.

Wie in den Figuren 2 und 3 zu sehen ist, umfasst die Vorsynchroneinheit 26 ein klotzartiges Bauteil 30, ein elastisches Federelement 32 sowie ein über das elastische Federelement 32 radial nach außen beaufschlagtes Kraftübertragungselement 34, hier in Form einer Kugel.

Das Kraftübertragungselement 34 sitzt in einer in Fig. 1 dargestellten Nut 36 auf der Innenseite der Schaltmuffe 16. Über die Nut 36 wird die axiale Mittenstellung, auch nicht-geschaltete Neutralstellung genannt, der Vorsynchroneinheit 26 definiert.

Ein Bauteil 30 ist im vorliegenden Beispiel mit angeformten Sperrzähnen 38 an seinen axialen Enden vorgesehen, die vor der Synchronisation ein Verschieben der Schaltmuffe 16 auf die Außenverzahnung der Gangräder 22, 24 verhindern. Die Sperrzähne 38 sind einstückiger Bestandteil des Bauteils 30, welches auch als Sperrstein bezeichnet wird.

Das Bauteil 30 verbindet und koppelt die beiden Synchronringe 18, 20 in axialer Richtung im Wesentlichen spielfrei miteinander. Dies erfolgt dadurch, dass an beiden axialen Hälften des Bauteils 30, im dargestellten Ausführungsbeispiel gemäß Fig. 3 an den axialen Rändern, radial einwärts gerichtete, einstückig angeformte Fortsätze 40 vorgesehen sind, die an aufeinander zu gewandten Innenseiten (im Folgenden Kontaktflächen) die axialen Außenseiten der zugeordneten Synchronringe 18, 20 berühren. Diese Kontaktflächen tragen das Bezugszeichen 42 und erstrecken sich in einem Winkel α zur Radialebene der Achse A, welcher im Wesentlichen 0°, vorzugsweise maximal 30° beträgt. Zur axialen Innenseite hin liegt jeder Synchronring 18, 20 an einer ebenfalls im Wesentlichen senkrecht zur Achse A verlaufenden Anschlagfläche 44 eines mittigen Fortsatzes 46 des Bauteils 30 an. Die Flächen 42, 44 sorgen für eine axiale Halterung der Synchronringe 18, 20.

Die Synchronringe 18, 20 haben eine konische radiale Innenseite, die dem Konus auf den Gangrädern 22, 24 entsprechen, wie es im Stand der Technik üblich ist. Die radialen Außenseiten der Synchronringe 18, 20 sind ebenfalls konisch ausgeführt und liegen an radial nach innen weisenden Kontaktflächen 48 des Bauteils 30 an (siehe Fig. 3).

Zwischen den Fortsätzen 40 und dem entsprechenden Konus auf dem Gangrad 18, 20 ist ein radialer Spalt 50 vorgesehen.

Das Bauteil 30 koppelt die Synchronringe 18, 20 auch in Umfangsrichtung. Hierzu haben, wie in Fig. 1 zu erkennen ist, die Synchronringe 18, 20 Ausnehmungen 52, deren Umfangslänge der Umfangslänge der Bauteile 30 die unterschiedliche Weisen angepasst sein kann.

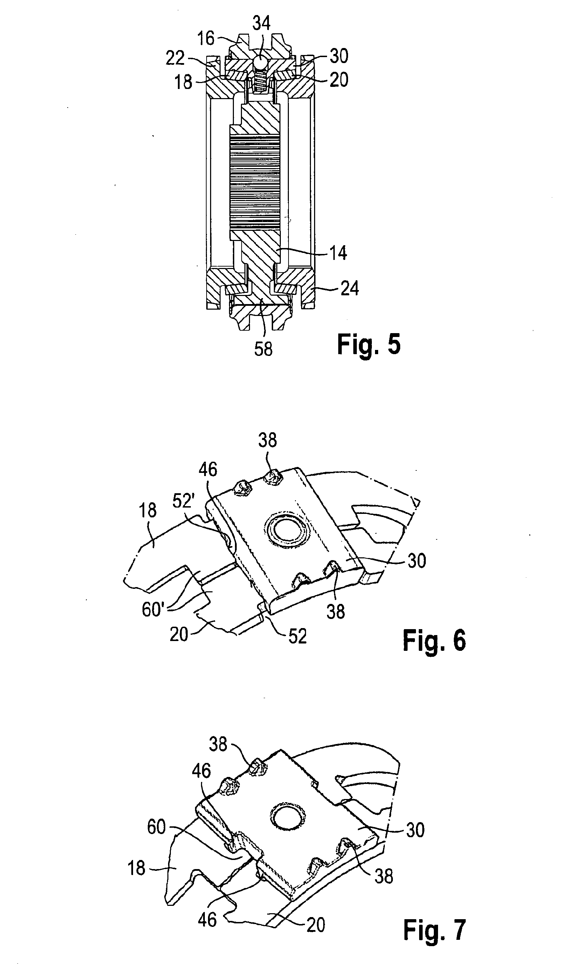

Gemäß der Ausführungsform nach Fig. 6 ist die Ausnehmung 52 in Umfangsrichtung etwas länger als das Bauteil 30. Das Bauteil 30 besitzt an seinen axialen Enden Fortsätze 40, die in axial äußere Ausnehmungen 52 der Synchronringe 18, 20 ragen, und einen axial mittigen Fortsatz 46, der in Ausnehmungen 52' zwischen umfangsmäßig benachbarten Paaren axial aufeinander zu laufender Vorsprünge 60' ragt. Ein Umfangsspiel oder axiales Spiel ist auch hier nicht vorhanden.

Bei der Variante gemäß Fig. 7 ist ebenfalls kein Umfangsspiel vorhanden, wie später noch erläutert wird. Bei sämtlichen Ausführungsformen, ausgenommen der letzten Ausführungsform, ist das Bauteil 30, welches die Synchronringe 18, 20 miteinander koppelt, stets starr ausgeführt, das heißt, es ist keine elastische Verformung im Betrieb in axialer Richtung vorhanden. In Radialansicht hat der Fortsatz 46 insbesondere eine H-förmige Gestalt, der in die Ausnehmung zwischen den Klauen 60 (siehe Fig. 4) beider Synchronringe 18, 20 ragt und diese in beiden axialen Richtungen sowie in Umfangsrichtung miteinander koppelt.

Darüber hinaus ist in den Fign. 2 und 3 zu sehen, dass die Vorsynchroneinheit radial vom Synchronkörper 14 beabstandet ist. Dies gilt auch für die übrigen Ausführungsformen.

Die Fign. 6 und 7 zeigen auch, dass das Bauteil 30 axial nicht über die Synchronringe 18, 20 vorsteht.

Im Folgenden wird die Funktionsweise der Synchronisationseinheit nach den Fign. 1-3 erläutert. Die Grundstellung ist die in Fig. 2 gezeigte, nicht-geschaltete axiale Neutralstellung. Die Mittenarretierung der Synchroneinheit 26 erfolgt durch die anderweitig mittig gehaltene Schaltmuffe 16 und das Kraftübertragungselement 34. Die Synchronringe 18, 20 werden über die Bauteile 30 axial in beiden Richtungen fixiert, sodass sie keinen Kontakt mit ihren zugeordneten Gangrädern 22, 24 haben.

Wird dann die Schaltmuffe 16 beispielsweise gemäß Fig. 3 nach links bewegt, nimmt das Kraftübertragungselement 34 das Bauteil 30 und dieses wiederum über die Anschlagfläche 44 am Fortsatz 46 den Synchronring 18 mit. Der Synchronring 18 wird gegen die konische Reibfläche des Gangrads 22 gedrückt, sodass dieses in Drehung versetzt wird. Ferner werden Schiebemuffe 16 und Vorsynchroneinheit 30 relativ zueinander verdreht. Wegen des rechten Fortsatzes 40 wird bei dieser Axialbewegung auch der Synchronring 20 mitverschoben, sodass es zu keinen Rasselgeräuschen oder Schleppmomenten kommt. Dies gilt im Übrigen auch für die Neutralstellung.

Aufgrund des Reibmoments zwischen den Konusflächen des Gangrads 22 und des Synchronrings 18 schlagen die beiden Synchronringe 18, 20 zusammen mit der Vorsynchroneinheit 30 um. Das heißt, sie verdrehen sich in Umfangsrichtung um einen sogenannten Umschlagwinkel. Beim gezeigten Ausführungsbeispiel wird der Umschlagwinkel durch Kontakt der Bauteile 30 mit der seitlichen Wand der Ausnehmung 28 des Synchronkörpers 14 begrenzt. Es findet vorzugsweise ein unmittelbarer Kontakt zwischen den Bauteilen 30 und dem Synchronkörper 14 beim Umschlagen in Umfangsrichtung statt. Der Umschlagwinkel wird derart ausgelegt, dass sich die Sperrflächen der Verzahnung 38 an den Bauteilen 30 der Verzahnung der Schiebemuffe 16 gegenüber stehen, sodass es zu einer Sperrung der Axialbewegung des Schiebemuffs 16 kommt.

Durch die axiale Kopplung und Umfangskopplung der Ringe 18, 20 können nach innen gerichtete Nocken an den Synchronringen entfallen, wodurch die Ausnehmungen 28 kleiner ausgeführt werden und die Festigkeit bzw. das zu übertragende Drehmoment gesteigert werden kann.

Nach Erreichen des Drehzahlangleichs der Getriebewellen entfällt auch das Reibmoment, sodass die in Axialrichtung zur Mitte hin zulaufenden Zähne der Verzahnung 38 (siehe Fig. 6) ein Verdrehen der Vorsynchroneinheiten 26 mit den Synchronringen 18, 20 in Umfangsrichtung erlauben. Damit sperrt die Verzahnung 38 nicht mehr den Weg für die Schaltmuffe 16, die dann nach links auf die Verzahnung des Gangrads 22 aufgeschoben werden kann. Bei dieser Bewegung weicht das Kraftübertragungselement 34 radial nach innen aus.

Um die Bewegung der Vorsynchroneinheiten 26 mit den Synchronringen 18, 20 zu erlauben, müssen die Synchronringe 18, 20 weit genug vom Nabensteg 58 (siehe Fig.2) beabstandet sein.

Ein weiterer Vorteil der dargestellten Ausführungsform ist die sehr geringe Kippneigung der Bauteile 30 während des Synchronisationsvorgangs. Wichtig hierbei ist, dass der radiale Spalt zwischen der Innenseite der Schaltmuffe 16 und der radialen Außenseite des Bauteils 30 so gering wie möglich, gegebenenfalls sogar Null sein kann.

Die Ausführungsform nach den Fign. 4 und 5 entspricht im Wesentlichen der zuvor erläuterten, sodass im Folgenden nur auf die Unterschiede eingegangen wird und funktionsgleiche Bauteile die bislang eingeführten Bezugszeichen tragen.

Bei der Ausführungsform nach den Fign. 4 und 5 wird die Kopplung der Synchronringe 18, 20 über axial nach innen gerichtete Klauen 60 realisiert, die gemäß der gezeigten Ausführungsform jeweils L-förmig paarweise aufeinander zu verlaufen, um eine Art Fenster zu bilden. Die Klauen 60 erfassen radial einwärts gerichtete Fortsätze 40 am Bauteil 30. Hierdurch werden die Synchronringe 18, 20 axial im Wesentlichen spielfrei miteinander gekoppelt. Im Vergleich zur vorher beschriebenen Ausführungsform können hier die Klauen 60 für den Anschlag beim Umschlagen verwendet werden, das heißt, die Klauen 60 schlagen seitlich gegen die die Ausnehmung 28 definierende Wand des Synchronkörpers 14. Die Belastungen für das Bauteil 30 werden damit reduziert.

Ein weiterer Vorteil dieser Ausführungsform besteht darin, dass die volle Reibfläche der Synchronringe 18, 20 genutzt werden kann.

Optional können für einen optimalen Kontakt die Klauen 60 zum Bauteil 30 jeweils zylindersegmentförmig ausgeführt sein, und zwar relativ zur Achse A.

Das Bauteil 30 gemäß Fig. 4 ist auch in Fig. 7 zu sehen.

Die Funktionsweise dieser Ausführungsform entspricht der Funktionsweise gemäß der zuvor beschriebenen Ausführungsform, sodass auf weitere Ausführungen hierzu verzichtet werden kann.

Fig. 8 zeigt eine weitere Ausführungsform der Erfindung, bei der die Synchronringe 18, 20 wie bei der vorhergehenden sperrverzahnungsfrei ausgebildet sind. Die Vorsynchroneinheit 26 ist eine Keilsynchronisationsbaugruppe wie sie beispielsweise in der DE 10 2007 010 307 B3 ausführlich beschrieben ist. Das Bauteil 30 koppelt entsprechend den Fign. 1-7 die Synchronringe 18, 20 axial und in Umfangsrichtung miteinander und ist ein sogenannter Synchronstein, der sich radial einwärts an den beiden Synchronringen 18, 20 abstützt. Das Federelement 32 stützt sich entweder an der Innenseite des Synchronkörpers 16, genauer gesagt an dessen Ausnehmung 28, ab oder, was bevorzugt ist, am Boden des Fortsatzes 46, der eine mittige Öffnung hat. Diese mittige Öffnung hat einen unteren Teil, in dem das Federelement 32 liegt und einen oberen, sich umgekehrt pyramidenförmig aufweitenden Bereich, indem ein sogenannter Sperrstein 72 liegt. Der Sperrstein 72 wird über das Federelement 32 radial gegen die Schaltmuffe 16 beaufschlagt, wobei der Sperrstein 72 eine Axialbewegung der Schaltmuffe 16 zu den Gangrädern 22, 24 hin freigeben oder sperren kann.

Die Sperrfunktion wird durch die besondere Geometrie des mit einigen Schrägflächen versehenen Sperrsteins 72 und der entsprechenden Schrägflächen in der Ausnehmung für den Sperrstein 72 realisiert. Hierdurch kann auf eine Sperrverzahnung an den Synchronringen 18, 20 oder am Bauteil 30 verzichtet werden.

Abgesehen von seiner Sperrfunktion entspricht ansonsten das Bauteil 30 gemäß Fig. 8 dem Bauteil 30 nach den Fign. 1-7 und der Sperrstein 72 dem Kraftübertragungselement 34. Auch bei dieser Ausführungsform können entweder die Synchronringe 18, 20 oder das Bauteil 30 beim Umschlagen an dem Synchronkörper 16 anschlagen.

Bei der Ausführungsform nach Fig. 9 handelt es sich um eine sogenannte Sperrsynchronisation mit Sperrzähnen 74 an den Synchronringen 18, 20 d.h. um eine Synchronisation nach dem sogenannten Borg-Warner-Prinzip. Auch hier hat das die Synchronringe 18, 20 verbindende Bauteil 30 Fortsätze 40 die den jeweiligen Synchronring, der nicht der Kraftübertragung dient, bei der axialen Verschiebung mitnehmen. Die Verschiebung des gerade Kraft übertragenden Synchronrings axial nach außen kann entweder ebenfalls über den Fortsatz 40 oder über den mittigen Fortsatz 46 und die Anschlagflächen 44 erfolgen.

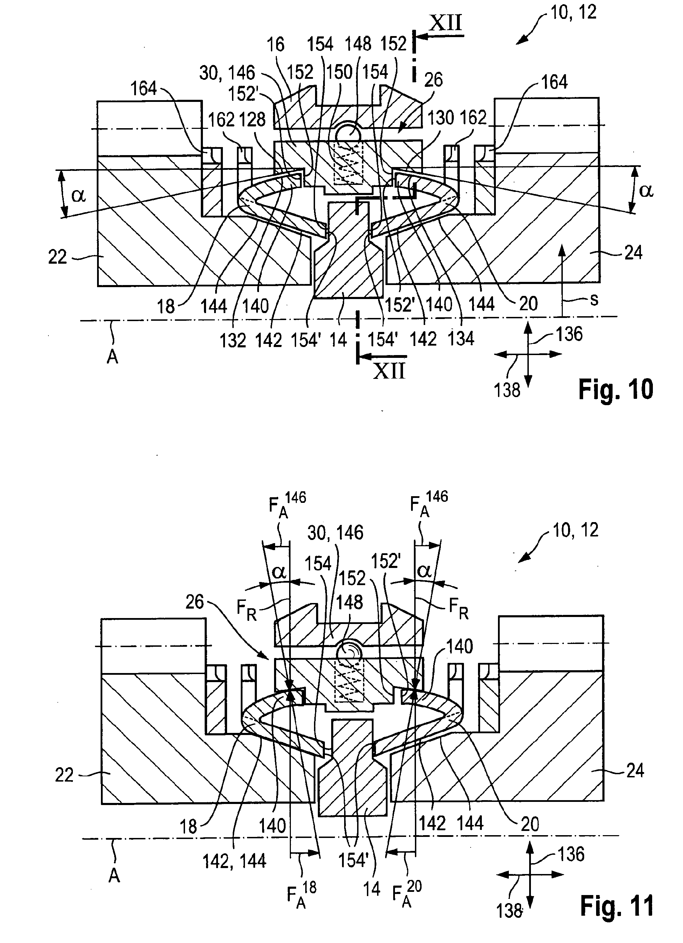

Die Figur 10 zeigt einen Schnitt durch ein Schaltgetriebe 10 eines Fahrzeugs längs einer Getriebeachse A, mit einer Synchronisationseinheit 12 gemäß einer weiteren Ausführungsform. Die Synchronisationseinheit 12 umfasst dabei einen Synchronkörper 14, der auf einer um die Getriebeachse A rotierbaren (nicht dargestellten) Getriebewelle drehfest angebracht ist, eine Schaltmuffe 16, die relativ zum Synchronkörper 14 drehfest, aber axial verschieblich angeordnet ist, einen Synchronring 18, 20 zur Kopplung des Synchronkörpers 14 mit einem Gangrad 22, 24 des Schaltgetriebes 10 über eine Reibverbindung, sowie eine Vorsynchroneinheit 26, die an der Schaltmuffe 16 angreift und bei einer Axialverschiebung der Schaltmuffe 16 den Synchronring 18, 20 mit einer axialen Schaltkraft gegen das zu koppelnde Gangrad 22, 24 beaufschlagt.

Die Vorsynchroneinheit 26 weist an seinen Enden radial nach innen ragende Fortsätze auf, mit radial innenseitigen Kontaktflächen 128, 130, über die sich die Vorsynchroneinheit 26 an Gegenflächen 132, 134 des Synchronrings 18, 20 in radialer Richtung 136 abstützt, wobei sowohl die Kontaktflächen 128, 130 als auch die Gegenflächen 132, 134 gegenüber einer Axialrichtung 138 so geneigt sind, dass sich in axialer Richtung 138 vom Synchronkörper 14 zum Gangrad 22, 24 hin gesehen ihr radialer Abstand s zur Drehachse A verringert.

Im vorliegenden Ausführungsbeispiel des Schaltgetriebes 10 sind in axialer Richtung 138 auf beiden Seiten des Synchronkörpers 14 jeweils ein Synchronring 18, 20 und ein Gangrad 22, 24 angeordnet. Die Vorsynchroneinheit 26 weist sowohl eine Kontaktfläche 128 für den in Figur 10 links dargestellten Synchronring 18 als auch eine Kontaktfläche 130 für den in Figur 10 rechts dargestellten Synchronring 20 auf und stützt sich somit symmetrisch an beiden Synchronringen 18, 20 radial nach innen ab. An beiden Synchronringen 18, 20 sind entsprechende Gegenflächen 132, 134 ausgebildet, an denen die Kontaktflächen 128, 130 der Vorsynchroneinheit 26 angreifen.

Jede Kontaktfläche 128, 130 erstreckt sich im Wesentlichen parallel zu ihrer jeweiligen Gegenfläche 132, 134, sodass sich die Vorsynchroneinheit 26 flächig an den Synchronringen 18, 20 abstützt. Die Kontakt- und Gegenflächen 128, 130 bzw. 132, 134 sind im Wesentlichen Kegelabschnittsflächen und daher im Längsschnitt der Figur 10 als gerade Schnittlinien sichtbar, die mit der Axialrichtung 138 einen Winkel α einschließen. Dieser Neigungswinkel α beträgt etwa 5° bis 20°, vorzugsweise 10° bis 15° und bestimmt letztlich eine Axialkraftkomponente F_{A} zur Mittenarretierung der Vorsynchroneinheit 26 sowie zur Beaufschlagung der Synchronringe 18, 20 weg von Reibflächen 144 ihrer zugeordneten Gangräder 22, 24 (vgl. auch Figur 11).

In dieser Ausführungsform der Synchronisationseinheit 12 sind an einem dem zugeordneten Gangrad 22, 24 zugewandten axialen Ende der Synchronringe 18, 20 in Richtung zum Synchronkörper 14 im Querschnitt betrachtet C- oder V-förmig abgewinkelte Abschnitte 140 vorgesehen, welche die Gegenflächen 132, 134 zum Abstützen der Vorsynchroneinheit 26 aufweisen. Die Abschnitte 140 sind einstückig mit den Synchronringen 18, 20 ausgebildet, also beispielsweise bei einem Sinterring bereits während des Sinterns angeformt oder bei einem Blechring gestanzt und nachträglich umgeformt.

Gemäß Figur 10 befindet sich die Synchronisationseinheit 12 in einer nicht-geschalteten Neutralstellung, in der die Schaltmuffe 16 und die Vorsynchroneinheit 26 axial mittig zum Synchronkörper 14 ausgerichtet sind. Die an den Synchronringen 18, 20 vorgesehenen Reibflächen 142 sind in dieser axialen Neutralstellung von den angrenzenden Reibflächen 144 der Gangräder 22, 24 beabstandet. Mit anderen Worten sind die Synchronringe 18, 20 in dieser Neutralstellung "entlüftet", da ein Abstand, also "Luft" zwischen den Reibflächen 142, 144 vorhanden ist.

Die Vorsynchroneinheit 26 umfasst in dieser Ausführungsform der Synchronisationseinheit 12 ein Druckstück 146, an dem die Kontaktflächen 128, 130 ausgebildet sind, ein Kraftübertragungselement 148, das üblicherweise eine Stahlkugel ist, und ein Federelement 150, welches das Druckstück 146 radial nach innen und das Kraftübertragungselement 148 radial nach außen beaufschlagt. Das Druckstück 146 ist ein die Synchronringe koppelnde Bauteil, welches den Bauteilen 30 nach den vorhergehenden Figuren entspricht. Die Vorsynchroneinheit 26 liegt also radial vorgespannt zwischen der Schaltmuffe 16 und den Synchronringen 18, 20, da das in Figur 10 als Schraubendruckfeder ausgeführte Federelement 150 das Druckstück 146 gegen die Abschnitte 140 der Synchronringe 18, 20 und das Kraftübertragungselement 148 gegen die Schaltmuffe 16 presst. Dementsprechend muss eine auf das Druckstück 146 wirkende, radiale Federkraft F_{R} über die Kontaktflächen 128, 130 und die Gegenflächen 132, 134 in die Synchronringe 18, 20 eingeleitet werden.

Infolge der Neigung der Kontakt- und Gegenflächen 128, 130, 132, 134 gegenüber der Axialrichtung 138 entsteht dabei jeweils eine axiale Kraftkomponente F_{A}¹⁴⁶ am Druckstück 146 und eine axiale Kraftkomponente F_{A}¹⁸ und F_{A}²⁰ an den Synchronringen 18 bzw. 20. Die axialen Kraftkomponenten F_{A}¹⁸ und F_{A}²⁰ beaufschlagen die Synchronringe 18, 20 aufeinander zu, also in die entlüftete Stellung gemäß Figur 10.

Das Druckstück 146 der Vorsynchroneinheit 26 ist aufgrund der im Betrieb des Schaltgetriebes 10 auftretenden Beanspruchungen üblicherweise als Sinterteil oder Blechteil gefertigt, kann alternativ aber auch aus einem widerstandsfähigen, gegebenenfalls faserverstärkten Kunststoff hergestellt sein.

Die Vorsynchroneinheit 26, genauer das Druckstück 146 der Vorsynchroneinheit 26, und die Synchronringe 18, 20, genauer die Abschnitte 140 der Synchronringe 18, 20, weisen einander zugeordnete Anschlagflächen 152, 152' zur Begrenzung einer axialen Relativbewegung auf. Darüber hinaus weisen der Synchronkörper 14 und die Synchronringe 18, 20 ebenfalls einander zugeordnete Anschlagflächen 154, 154' zur Begrenzung einer axialen Relativbewegung auf. Idealerweise liegen in der Neutralstellung der Synchronisationseinheit 12 gemäß Figur 10 alle einander zugeordneten Anschlagflächen 152, 152'; 154, 154' aneinander an. Die Synchronringe 18, 20 sind dabei axial aufeinander zu beaufschlagt und werden mit ihren Anschlagflächen 152', 154' gegen die zugeordneten Anschlagflächen 152, 154 des Druckstücks 146 und des Synchronkörpers 14 gedrückt. Infolge dieser Beaufschlagung der Synchronringe 18, 20 in ihre jeweilige Entlüftungsstellung werden unerwünschte Schleppmomente im Getriebe 10 minimiert.

Ausgehend von der nicht-geschalteten Neutralstellung in Figur 10 ist die Synchronisationseinheit 12 in Figur 11 zum Beispiel durch eine zufällige Getriebeanregung axial ausgelenkt. Beispielhaft ist hier die Vorsynchroneinheit 26 und über die Anschlagflächen 152, 152' auch der linke Synchronring 18 axial nach links verschoben. Infolge dieser Axialverschiebung bewegen sich die Reibflächen 142, 144 des Synchronrings 18 und des Gangrads 22 aufeinander zu, sodass es zu einer Angleichung der Differenzdrehzahlen zwischen dem Gangrad 22 und dem Synchronkörper 14 kommen kann.

Durch die Axialverschiebung entfernen sich gleichzeitig die Anschlagflächen 154, 154' zwischen dem (linken) Synchronring 18 und dem Synchronkörper 14 sowie die Anschlagflächen 152, 152' zwischen der Vorsynchroneinheit 26 und dem (rechten) Synchronring 20. Der Synchronring 20 wird dabei durch die axiale Kraftkomponente F_{A}²⁰ axial in Richtung zum Synchronkörper 14 beaufschlagt, wobei eine entsprechende Synchronringverschiebung durch die Anschlagflächen 154, 154' verhindert und die Kraftkomponente F_{A}²⁰ durch eine Auflagerkraft im Synchronkörper 14 neutralisiert wird. Ferner wirkt entgegen der Verschieberichtung die axiale Kraftkomponente F_{A}¹⁴⁶ auf die Vorsynchroneinheit 26 und beaufschlagt diese mitsamt der Schaltmuffe 16 in die axiale Neutralstellung gemäß Figur 10. Folglich ist durch die zusammenwirkenden Flächen 130, 134 mit einfachen Mitteln eine axiale Mittenarretierung der Vorsynchroneinheit 26 realisiert.

Bei dieser Rückstellung der Vorsynchroneinheit 26 in ihre axiale Neutralstellung wird auch der (linke) Synchronring 18 "mitgenommen", da die axialen Kraftkomponenten F_{A}¹⁸ und F_{A}¹⁴⁶ die Anschlagflächen 152, 152' gegeneinander beaufschlagen, sodass sich der Synchronring 18 zusammen mit der Vorsynchroneinheit 26 nach rechts in die Neutralstellung gemäß Figur 10 bewegt. Dabei entfernt sich die Reibfläche 142 des Synchronrings 18 auch wieder von der Reibfläche 144 des Gangrads 22, wodurch unerwünschte Schleppmomente vermieden oder verringert werden.

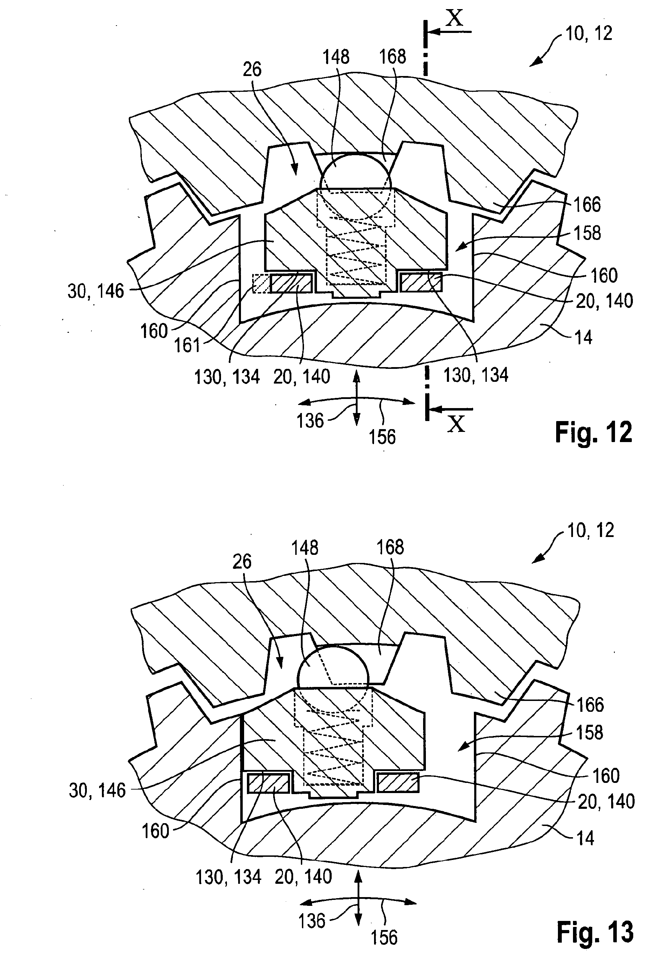

Die Figur 12 zeigt ein schematisches Querschnittdetail der Synchronisationseinheit 12 gemäß der Ausführungsform nach Figur 10 im Bereich der Vorsynchroneinheit 26, wobei sich die Synchronisationseinheit 12 in Umfangsrichtung 156 gesehen in einer mittigen Freigabestellung befindet.

Anhand der Figur 12 wird deutlich, dass der Synchronkörper 14 an seinem Außenumfang eine Ausnehmung 158 aufweist, in der die Vorsynchroneinheit 26 aufgenommen ist. Ferner sind die Abschnitte 140 des Synchronrings 20 zu sehen, auf denen das Druckstück 146 aufliegt. Die Abschnitte 140 mit den Gegenflächen 134 erstrecken sich dabei axial in die Ausnehmung 158 des Synchronkörpers 14.

Im dargestellten Ausführungsbeispiel erstreckt sich das Druckstück 146 passgenau zwischen zwei solche Abschnitte 140. Dementsprechend sind die Vorsynchroneinheit 26, genauer das Druckstück 146 der Vorsynchroneinheit 26, und der Synchronring 20 in Umfangsrichtung 156 weitgehend spielfrei verbunden. Da die Abschnitte 140 beider Synchronringe 18, 20 in gleicher Weise an der Vorsynchroneinheit 26 angreifen, sind die beiden Synchronringe 18, 20 durch die Vorsynchroneinheit 26 in Umfangsrichtung 156 ebenfalls im Wesentlichen spielfrei verbunden. Dies führt zu einem besonders geräuscharmen Betrieb des Schaltgetriebes 10, da zwischen dem Synchronkörper 14 und den Synchronringen 18, 20 auftretende Klappergeräusche infolge der beschriebenen Kopplung deutlich verringert werden.

Die Figur 13 zeigt ein Querschnittdetail analog zu Figur 12, wobei sich die Synchronisationseinheit 12 in einer Sperrstellung befindet. Diese Sperrstellung ist in Umfangsrichtung 156 durch einen Anschlag zwischen der Vorsynchroneinheit 26, genauer dem Druckstück 146 der Vorsynchroneinheit 26, und einer Wand 160 in der Ausnehmung 158 des Synchronkörpers 14 definiert.

In einer alternativen Ausführungsvariante ist es auch denkbar, dass sich die Abschnitte 140 in Umfangsrichtung 156 über die Begrenzung des Druckstücks 146 hinaus erstrecken, sodass die Sperrstellung durch einen Anschlag zwischen den Abschnitten 140 des Synchronrings 18, 20 und der Wand 160 des Synchronkörpers 14 definiert wären. In Figur 12 ist diese Variante am linken Abschnitt 140 gestrichelt angedeutet und mit dem Bezugszeichen 161 versehen.

Im Folgenden wird anhand der Figuren 10 bis 13 kurz die Funktionsweise der Synchronisationseinheit 12 gemäß dieser Ausführungsform erläutert. Zum Schalten des Getriebes 10 wird auf die Schaltmuffe 16 eine axiale Schaltkraft aufgebracht, die über das Kraftübertragungselement 148 und das Druckstück 146 an den jeweiligen Synchronring 18, 20 weitergeleitet wird. Der Synchronring 18, 20 wird dadurch axial verschoben, bis er eine Reibverbindung mit dem zugeordneten Gangrad 22, 24 ausbildet. Bei einem Drehzahlunterschied zwischen dem Synchronkörper 14 und dem jeweiligen Gangrad 22, 24 bewegt sich der Synchronring 18, 20 mitsamt dem Druckstück 146 der Vorsynchroneinheit 26 in die Sperrstellung gemäß Figur 13.

In dieser Ausführungsform der Synchronisationseinheit 12 weist der Synchronring 18, 20 eine Sperrverzahnung 162 auf (vgl. Figuren 10 und 11). Diese Sperrverzahnung 162 verhindert in der Sperrstellung gemäß Figur 4 eine Axialbewegung der Schaltmuffe 16 zum Gangrad 22, 24 hin, wohingegen sie in der Freigabestellung gemäß Figur 12 eine solche Axialbewegung erlaubt.

Erst wenn sich die Drehzahlen des Synchronkörpers 14 und des Gangrads 22, 24 weitgehend angeglichen haben, lässt die Umfangskraft, welche die Synchronisationseinheit 12 in ihre Sperrstellung beaufschlagt, so weit nach, dass die Schaltkraft ausreicht, um die Synchronisationseinheit 12 in ihre Freigabestellung zu überführen und die Schaltmuffe 16 über die Sperrverzahnung 162 hinweg auf eine Schaltverzahnung 164 des Gangrads 22, 24 zu schieben. Die Sperrverzahnung 162 sowie eine Innenverzahnung 166 der Schaltmuffe 16 weisen hierzu in Axialrichtung 138 keilförmig zulaufende Zähne auf, sodass der Synchronring 18, 20 relativ zum Synchronkörper 14 durch die axiale Schaltkraft in Umfangsrichtung 156 von der Sperrstellung in die Freigabestellung beaufschlagt ist.

Die Bewegung der Synchronisationseinheit 12 zwischen Freigabestellung und Sperrstellung wird auch als "Umschlagen" der Synchronisationseinheit 12 bezeichnet. Um ein problemloses, das heißt insbesondere reibungsarmes Umschlagen der Synchronisationseinheit 12 zu ermöglichen, ist die Vorsynchroneinheit 26 vom Synchronkörper 14 radial beabstandet. Dadurch kann sich der Synchronring 18, 20 zusammen mit dem Druckstück 146 der Vorsynchroneinheit 26 in Umfangsrichtung 56 ohne Behinderung relativ zum Synchronkörper 14 bewegen. Darüber hinaus ist in der Innenverzahnung 166 der Schaltmuffe 16 eine Umfangsnut 168 für das Kraftübertragungselement 148 vorgesehen, sodass das Kraftübertragungselement 148 beim Umschlagen unter geringem Gleit- oder Rollwiderstand relativ zur Schaltmuffe 16 in Umfangsrichtung 156 bewegt werden kann.

Wie in den Figuren 10 und 11 angedeutet, ist die Sperrverzahnung 162 in Umfangsrichtung 156 gesehen im Bereich der abgewinkelten Abschnitte 140 unterbrochen. Dies hat im Wesentlichen fertigungstechnische Gründe.

Der Vollständigkeit halber sei noch darauf hingewiesen, dass gewöhnlich über den Außenumfang des Synchronkörpers 14 verteilt mehrere, insbesondere drei Vorsynchroneinheiten 26 angeordnet sind.

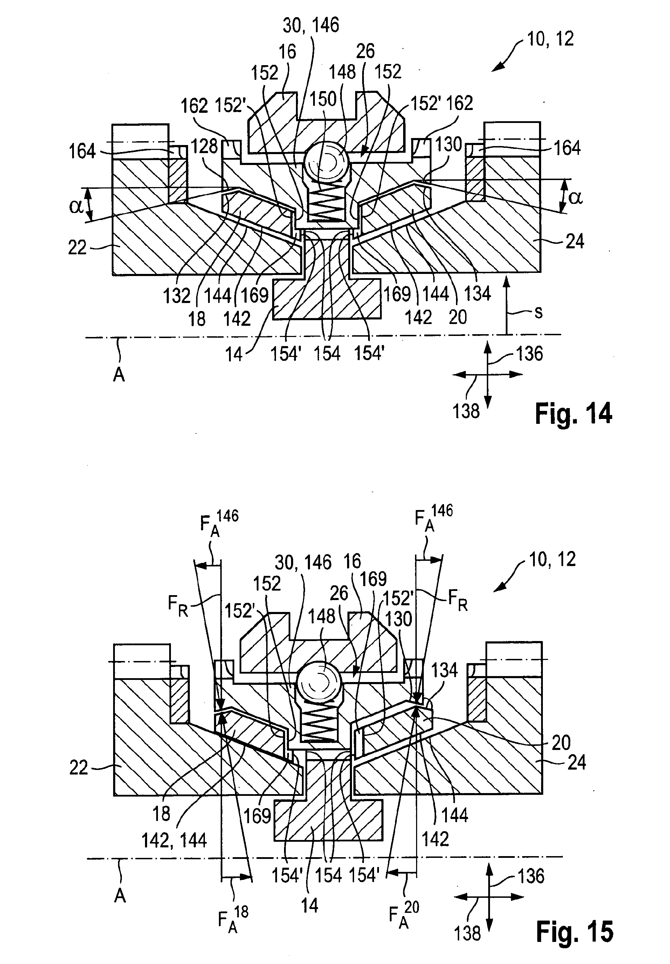

Die Figuren 14 und 15 zeigen das Schaltgetriebe 10 mit einer Synchronisationseinheit 12 gemäß einer weiteren Ausführungsform. Die Synchronisationseinheit 12 befindet sich gemäß Figur 14 in einer nicht-geschalteten axialen Neutralstellung analog zu Figur 10 und gemäß Figur 15 in einer axial ausgelenkten Stellung analog zu Figur 11.

Die Mittenarretierung der Vorsynchroneinheit 26 sowie die Verringerung von Schleppmomenten mittels geneigter Kontakt- und Gegenflächen 128, 130, 132, 134 erfolgt nach dem Prinzip der Ausführungsform nach den Figuren 1 bis 7, weshalb diesbezüglich auf die obige Beschreibung verwiesen wird.

Bezüglich der allgemeinen Funktion des Schaltgetriebes 10 wird ebenfalls auf die Beschreibung der Figuren 10 bis 13 verwiesen und im Folgenden lediglich auf Unterscheidungsmerkmale eingegangen.

Im Unterschied zur Ausführungsform der Synchronisationseinheit 12 gemäß den Figuren 10 bis 13 umfasst in der Ausführungsform gemäß den Figuren 14 und 15 die Vorsynchroneinheit 26 die Sperrverzahnung 162, welche eine Axialbewegung der Schaltmuffe 16 zum Gangrad 22, 24 hin freigeben oder sperren kann.

Da auch in dieser Ausführungsform die Vorsynchroneinheit 26 und der Synchronring 18, 20 in Umfangsrichtung 156 im Wesentlichen spielfrei verbunden sind, ändert sich am Funktionsprinzip des Schaltgetriebes 10 im Vergleich zur vorhergehenden Ausführungsform nichts.

Ein weiterer Unterschied zur vorhergehenden Ausführungsform ist die geänderte und dabei deutlich vereinfachte Form des Synchronrings 18, 20. Der Synchronring 18, 20 kann hier als Konusring bezeichnet werden und weist eine radiale Innenseite auf, die sich in axialer Richtung 138 vom Synchronkörper 14 zum Gangrad 22, 24 hin gesehen konisch aufweitet. Die Besonderheit ist, dass der Synchronring 18, 20 eine radiale Außenseite aufweist, die sich in axialer Richtung 138 vom Synchronkörper 14 zum Gangrad 22, 24 hin gesehen zunächst parallel zur Innenseite radial bis zu einem Maximaldurchmesser aufweitet, dann jedoch radial verjüngt. Dieser sich vom Maximaldurchmesser zum Gangrad 22, 24 hin verjüngende Bereich bildet die Gegenfläche 132, 134 für die Kontaktfläche 128, 130 der Vorsynchroneinheit 26, genauer dem Druckstück 146 der Vorsynchroneinheit 26 (vgl. Figur 15). Auch bei dieser Variante hat das koppelnde Bauteil (hier das Druckstück 146) nach innen ragende Fortsätze, mit denen es die Synchronringe 18, 20 axial haltert und koppelt.

Die in Umfangsrichtung 156 im Wesentlichen spielfreie Verbindung zwischen der Vorsynchroneinheit 26 und dem Synchronring 18, 20 erfolgt durch axiale Fortsätze 169 an den Synchronringen 18, 20. Analog zu den Abschnitten 140 in den Figuren 12 und 13 erstreckt sich das Druckstück 146 so zwischen zwei in Umfangsrichtung 156 beabstandete Fortsätze 169 jedes Synchronrings 18, 20, dass die Synchronringe 18, 20 im Wesentlichen drehfest mit dem Druckstück 146 gekoppelt sind.

Im Bereich der axialen Fortsätze 169 sind am Synchronkörper 14 Anschlagflächen 154 ausgebildet, die mit Anschlagflächen 154' zusammenwirken, welche an den angrenzenden axialen Enden der Fortsätze 169 ausgebildet sind. Wie in Figur 11 verhindern diese Anschlagflächen 154, 154', dass sich der (rechte) Synchronring 20 in Figur 15 axial weiter in Richtung zum Synchronkörper 14 (nach links) bewegt.

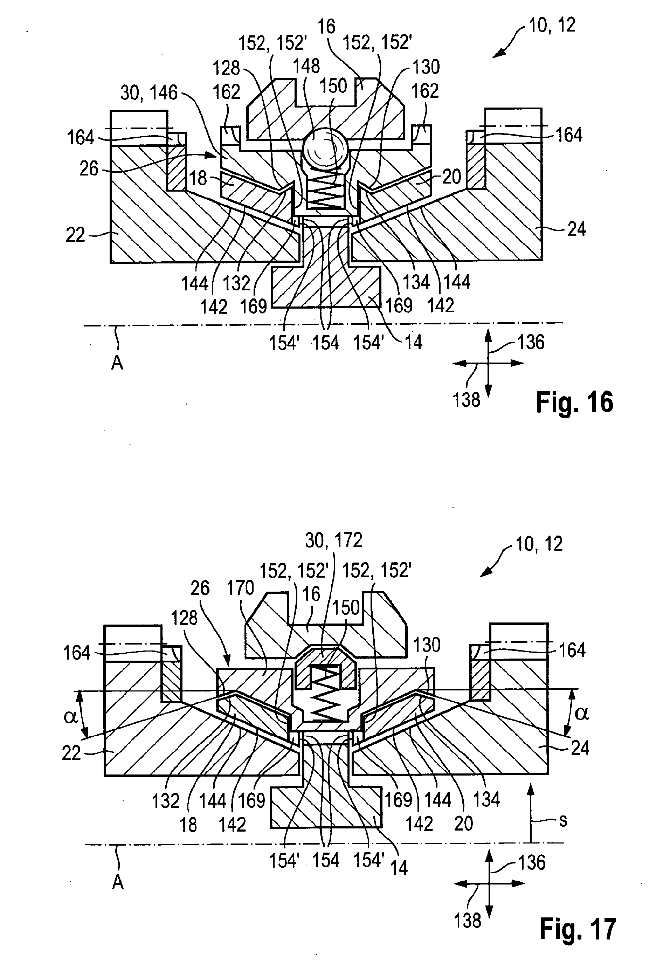

Eine weitere Ausführungsform der Synchronisationseinheit 12 in einer nicht-geschalteten Neutralstellung ist im Längsschnitt des Schaltgetriebes 10 gemäß Figur 16 dargestellt. Sie ist weitgehend identisch mit der bereits erläuterten Ausführungsform gemäß den Figuren 14 und 15.

Der einzige wesentliche Unterschied liegt darin, dass der Synchronring 18, 20 eine radiale Außenseite aufweist, die sich in axialer Richtung 138 vom Synchronkörper 14 zum Gangrad 22, 24 hin gesehen zunächst radial bis zu einem Minimaldurchmesser verjüngt und dann radial aufweitet, parallel zur radialen Innenseite des Synchronrings 18, 20. Der sich vom Synchronkörper 14 zum Minimaldurchmesser hin verjüngende Bereich bildet die Gegenfläche 132, 134 für die Kontaktfläche 128, 130 der Vorsynchroneinheit 26, genauer dem Druckstück 146 der Vorsynchroneinheit 26.

Die Figur 17 zeigt das Schaltgetriebe 10 mit einer Synchronisationseinheit 12 gemäß einer anderen Ausführungsform, wobei die Synchronisationseinheit 12 analog zu den Figuren 10 und 14 in einer nicht-geschalteten Neutralstellung dargestellt ist.

Diese andere Ausführungsform unterscheidet sich von der Ausführungsform nach den Figuren 14 und 15 lediglich durch einen unterschiedlichen Sperrmechanismus des Getriebes 10, der im Folgenden kurz erläutert wird. Im Übrigen wird auf die obige Beschreibung zu den Figuren 10 bis 16 verwiesen.

Gemäß Figur 17 ist die Vorsynchroneinheit 26 eine Sperrkeilsynchronisationsbaugruppe, mit einem Synchronstein 170, der sich in radialer Richtung 136 am Synchronring 18, 20 abstützt, dem Federelement 150, das sich am Synchronstein 170 abstützt, und einem Sperrstein 172, der durch das Federelement 150 radial gegen die Schaltmuffe 16 beaufschlagt ist, wobei der Sperrstein 172 eine Axialbewegung der Schaltmuffe 16 zum Gangrad 22, 24 hin freigeben oder sperren kann.

Die Sperrfunktion der Synchronisationseinheit 12 wird somit durch die besondere Geometrie des Sperrsteins 172 und des Synchronsteins 170 der Vorsynchroneinheit 26 realisiert, wodurch auf eine Sperrverzahnung 162 am Synchronring 18, 20 (Figuren 10 bis 13) oder eine Sperrverzahnung 162 am Druckstück 146 (Figuren 14 und 15) verzichtet werden kann. Das allgemeine Sperrprinzip mittels Synchronstein 170 und Sperrstein 172 ist bereits in der DE 10 2007 010 307 B3 ausführlich beschrieben, weshalb hier nicht näher darauf eingegangen wird.

Abgesehen von seiner Sperrfunktion entspricht ansonsten der Synchronstein 170 im Wesentlichen dem Druckstück 146 und der Sperrstein 172 im Wesentlichen dem Kraftübertragungselement 148.

Allgemein ausgedrückt umfasst die Vorsynchroneinheit 26 in jeder Ausführungsform gemäß den Figuren 10 bis 17 mit dem Druckstück 146 oder dem Synchronstein 170 ein die beiden Synchronringe 18, 20 koppelndes Bauteil 30 mit einwärts ragenden Fortsätzen, an dem die Kontaktflächen 128, 130 ausgebildet sind, sowie das Federelement 150, welches das koppelnde Bauteil 30 radial gegen die Synchronringe 18, 20 beaufschlagt. Diese radiale Beaufschlagung in Verbindung mit den geneigten Kontakt- und Gegenflächen 128, 130, 132, 134 ermöglicht bei besonders geringem konstruktivem Aufwand eine vorteilhafte axiale Mittenarretierung der Vorsynchroneinheit 26 sowie eine deutliche Verringerung der Schleppmomente.

Bei der Ausführungsform nach Fig. 18 ist das Bauteil 30 als sogenannter Synchronstein ausgeführt, der einen Sperrstein 72 aufnimmt, welcher entsprechend Fig. 8 über ein Federelement 32 radial nach außen gegen die Schaltmuffe 16 gedrückt wird.

Das Bauteil 30 besitzt angeformte Fortsätze 40, die bei der gezeigten Ausführungsform federnd ausgebildet sind, also nicht starr wie bei sämtlichen vorherigen Ausführungsformen. Diese Fortsätze können auch als Federelemente bezeichnet werden. Sie greifen in Ausnehmungen 80 der Synchronringe 18, 20, die, wie in den übrigen Ausführungsformen (dort jedoch nicht zu sehen), mit einem Reibbelag 80 versehen sind. Die Bezugszeichen 82 bezeichnen die konischen Reibflächen auf den Gangrädern 22, 24.

Fig. 18 zeigt die sogenannten Kupplungsscheiben 84, die drehfest mit dem Rest der Gangräder 22, 24 verbunden sind, Kupplungsverzahnungen 86 zum Verzahnen mit der Schaltmuffe 16 aufweisen, als Teil des zugeordneten Gangrads anzusehen sind und auch einstückiger Bestandteil desselben sein können.

Auch bei dieser Ausführungsform wird über das Bauteil 30 eine Kopplung der Synchronringe 18, 20 in axialer Richtung realisiert, sodass eine Mittenarretierung der Schaltmuffe und der Synchronisationseinheit erreicht wird.

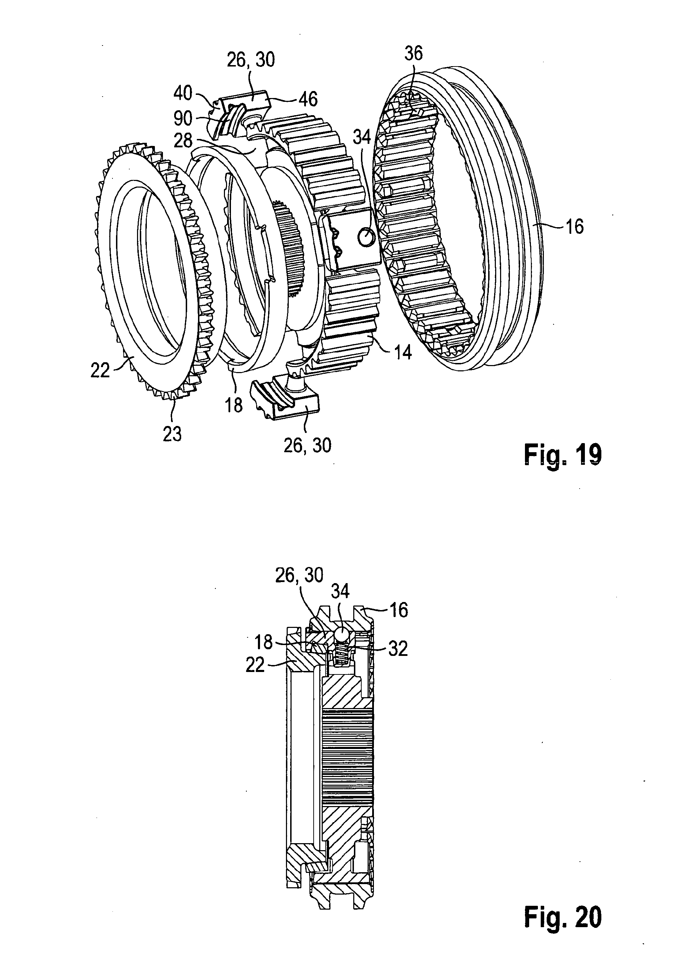

Bei der Ausführungsform nach den Figuren 19 und 20 ist nur ein Gangrad 22 (symbolisiert durch den dargestellten Kupplungskörper) vorhanden, dementsprechend auch nur ein Synchronring 18. Vorsynchroneinheiten 16 haben einen außenseitigen Fortsatz 40 sowie einen Fortsatz 46 auf der gegenüberliegenden Seite, so dass sich zwischen diesen Fortsätzen 40, 46 eine Nut 90 zur Aufnahme des Synchronrings 18 ergibt. Die Vorsynchroneinheiten 26 mit ihren Bauteilen 30 sorgen dafür, dass in der nicht geschalteten Neutralstellung (siehe Figur 20) der Synchronring 18 in beiden entgegengesetzten axialen Richtungen formschlüssig und fest positioniert ist. Hierzu ist natürlich auch der Formschluss zwischen der Schaltmuffe 16 über das Kraftübertragungselement 34 und das Federelement 32 mit verantwortlich. Das Kraftübertragungselement 34 ist in der Neutralstellung, wie bereits zuvor erläutert, in der Nut 36 in der Schaltmuffe 16 formschlüssig gehalten.

Ansonsten sind die zuvor erwähnten Einzelheiten auch auf diese Ausführungsform anwendbar.

## Patentansprüche

1. Synchronisationseinheit eines Getriebes, mit
einem Synchronkörper (14), der auf einer Getriebewelle drehfest angebracht ist,
einer Schaltmuffe (16), die relativ zum Synchronkörper (14) drehfest, aber axial verschieblich angeordnet ist,
wenigstens einem Synchronring (18, 20) zur Kopplung des Synchronkörpers (14) mit einem zugeordneten Gangrad (22, 24) des Getriebes über eine Reibverbindung, sowie
einer Vorsynchroneinheit (26), die an der Schaltmuffe (16) angreift und bei einer Axialverschiebung der Schaltmuffe (16) den zugeordneten Synchronring (18, 20) mit einer axialen Schaltkraft gegen das zu koppelnde Gangrad beaufschlagt,
wobei die Vorsynchroneinheit (26) den Synchronring (18, 20) in beiden entgegengesetzten Axialrichtungen formschlüssig hält und positioniert,
wobei zwei axial gegenüberliegende Synchronringe (18, 20) zur Kopplung des Synchronkörpers (14) mit wahlweise einem von zwei Gangrädern (22, 24) des Getriebes über eine Reibverbindung vorgesehen sind, und die Vorsynchroneinheit (26) die beiden Synchronringe (18, 20) in Axialrichtung zur gemeinsamen Axialverschiebung formschlüssig miteinander koppelt,
wobei ein die beiden Synchronringe (18, 20) koppelndes, starres Bauteil (30) der Vorsynchroneinheit (26) vorgesehen ist und die Vorsynchroneinheit (26) wenigstens ein Federelement (32) aufweist,
**dadurch gekennzeichnet, dass** das wenigstens eine Federelement (32) das koppelnde Bauteil (30) radial einwärts beaufschlagt.

2. Synchronisationseinheit nach Anspruch 1, **dadurch gekennzeichnet, dass** die Vorsynchroneinheit und die Synchronringe (18, 20) in Axialrichtung und/oder in Umfangsrichtung im Wesentlichen spielfrei miteinander gekoppelt sind.

3. Synchronisationseinheit nach Anspruch 1 oder 2, **dadurch gekennzeichnet, dass** mehrere am Umfang des Synchronkörpers (14) verteilte, die Synchronringe (18, 20) koppelnde Bauteile (30) vorgesehen sind und/oder wobei das oder die die Synchronringe (18, 20) koppelnden Bauteile (30) in zugeordneten Ausnehmungen (28) im Synchronkörper (14) untergebracht sind.

4. Synchronisationseinheit nach Anspruch 3, **dadurch gekennzeichnet, dass** das koppelnde Bauteil (30) einen mittigen Fortsatz (46) und/oder an seinen axialen Hälften radial einwärts gerichtete Fortsätze (40) aufweist, die an den Synchronringen (18, 20) angreifen, insbesondere in Ausnehmungen (52) der Synchronringe. (18, 20) eingreifen.

5. Synchronisationseinheit nach Anspruch 3 oder 4, **dadurch gekennzeichnet, dass** zumindest ein Synchronring (18, 20) wenigstens eine abstehende Klaue (60) hat, die das koppelnde Bauteil (30) erfasst.

6. Synchronisationseinheit nach einem der vorhergehenden Ansprüche, **dadurch gekennzeichnet, dass** die Synchronringe (18, 20) in Umfangsrichtung am Synchronkörper (14) zur Begrenzung des Umschlagwinkels beim Synchronisieren anschlagen oder das koppelnde Bauteil (30) in Umfangsrichtung am Synchronkörper (14) zur Begrenzung des Umschlagwinkels beim Synchronisieren anschlägt.

7. Synchronisationseinheit nach einem der vorhergehenden Ansprüche, **dadurch gekennzeichnet, dass** die Vorsynchroneinheit (26) ein durch das Federelement (32) radial nach außen beaufschlagtes Kraftübertragungselement (34) aufweist, welches in eine Nut (36) an der Schaltmuffe (16) eingreift und die Axialverschiebung der Schaltmuffe (16) in die Vorsynchroneinheit (26) einleitet.

8. Synchronisationseinheit nach einem der vorhergehenden Ansprüche, **dadurch gekennzeichnet, dass** die Vorsynchroneinheit (26) Sperrverzahnungen (38) an dem koppelnden Bauteil (30) aufweist, die eine Axialbewegung der Schaltmuffe (16) zu den Gangrädern (22, 24) hin freigeben oder sperren kann.

9. Synchronisationseinheit nach einem der Ansprüche 1 bis 7, **dadurch gekennzeichnet, dass** die Vorsynchroneinheit eine Sperrkeilsynchronisationsbaugruppe ist, mit einem Synchronstein, der sich in radialer Richtung am Synchronring abstützt, einem Federelement (32), das sich am Synchronstein abstützt, und einem Sperrstein (72), der durch das Federelement (32) radial gegen die Schaltmuffe(16) beaufschlagt ist, wobei der Sperrstein (72) eine Axialbewegung der Schaltmuffe (16) zum Gangrad (22, 24) hin freigeben oder sperren kann.

10. Synchronisationseinheit nach einem der vorhergehenden Ansprüche, **dadurch gekennzeichnet, dass** die Vorsynchroneinheit (26) die Synchronringe (18, 20) so miteinander koppelt, dass beim Axialverschieben der nicht zur Kraftübertragung dienende Synchronring (18, 20) über eine Kontaktfläche (42) am koppelnden Bauteil (30) und eine Gegenfläche am Synchronring (18, 20) mitgenommen wird, die in einem Winkel von minimal 60 Grad zur axialen Richtung, vorzugsweise im Wesentlichen senkrecht zur axialen Richtung, verläuft.

11. Synchronisationseinheit nach einem der vorhergehenden Ansprüche, **dadurch gekennzeichnet, dass** die Vorsynchroneinheit (26) für jeden Synchronring (18, 20) eine Kontaktfläche aufweist und sich über diese Kontaktfläche an einer Gegenfläche des Synchronrings in radialer Richtung abstützt, wobei sowohl die Kontaktfläche als auch die Gegenfläche gegenüber einer axialen Richtung so geneigt sind, dass sich in axialer Richtung vom Synchronkörper (14) zum Gangrad (22, 24) hin gesehen ihr radialer Abstand (s) zu einer Getriebeachse (A) verringert, insbesondere wobei die Kontaktfläche und die Gegenfläche im Wesentlichen parallel sind, so dass sich die Vorsynchroneinheit flächig am Synchronring abstützt.

12. Synchronisationseinheit nach einem der vorhergehenden Ansprüche, **dadurch gekennzeichnet, dass** die Vorsynchroneinheit (26), insbesondere das koppelnde Bauteil (30), und die Synchronringe (18, 20) einander zugeordnete Anschlagflächen (44) an einem axial zwischen die Synchronringe (18, 20) ragenden Fortsatz (46) der Vorsynchroneinheit aufweisen, zur Begrenzung einer axialen Relativbewegung der Synchronringe (18, 20) und/oder zur axialen Kopplung der Synchronringe (18, 20).

13. Synchronisationseinheit nach einem der vorhergehenden Ansprüche, **dadurch gekennzeichnet, dass** die Vorsynchroneinheit (26) vom Synchronkörper (14) radial beabstandet ist.

14. Synchronisationseinheit nach einem der vorhergehenden Ansprüche, **dadurch gekennzeichnet, dass** die Synchronringe (18, 20) jeweils eine radiale Außenseite aufweisen, die sich in axialer Richtung vom Synchronkörper (14) zum zugeordneten Gangrad (22, 24) hin gesehen zunächst radial aufweitet und dann radial verjüngt, oder umgekehrt.

15. Synchronisationseinheit nach einem der vorhergehenden Ansprüche, **dadurch gekennzeichnet, dass** die beiden Synchronringe (18, 20) in einer nicht-geschalteten Neutralstellung des Getriebes durch die Vorsynchroneinheit (26) axial aufeinander zu beaufschlagt sind.

## Claims

1. A synchronization unit of a gearbox, comprising
a synchronizer body (14) which is mounted on a gear shaft for joint rotation therewith,
a shifting sleeve (16) which is arranged for joint rotation with the synchronizer body (14), but so as to be axially displaceable relative thereto,
at least one synchronizer ring (18, 20) for coupling the synchronizer body (14) to an associated speed change gear (22, 24) of the gearbox by means of a frictional connection, and
a pre-synchronizing unit (26) which engages the shifting sleeve (16) and, upon an axial displacement of the shifting sleeve (16), applies an axial shifting force to urge the associated synchronizer ring (18, 20) against the speed change gear to be coupled,
the pre-synchronizing unit (26) holding and positioning the synchronizer ring (18, 20) with an interlocking fit in both opposite axial directions,
two axially opposed synchronizer rings (18, 20) being provided for coupling the synchronizer body (14) to a selective one of two speed change gears (22, 24) of the gearbox by means of a frictional connection, and the pre-synchronizing unit (26) coupling the two synchronizer rings (18, 20) to each other in the axial direction with an interlocking fit for joint axial displacement,
provision being made for a rigid component (30) of the pre-synchronizing unit (26) that couples the two synchronizer rings (18, 20), and the pre-synchronizing unit (26) including at least one spring element (32),
**characterized in that** the at least one spring element (32) urges the coupling component (30) radially inwards.

2. The synchronization unit according to claim 1, **characterized in that** the pre-synchronizing unit and the synchronizer rings (18, 20) are coupled to each other in the axial direction and/or in the circumferential direction so as to be substantially free of play.

3. The synchronization unit according to claim 1 or 2, **characterized in that** provision is made for a plurality of components (30) distributed on the circumference of the synchronizer body (14) and coupling the synchronizer rings (18, 20), and/or the component(s) (30) coupling the synchronizer rings (18, 20) being accommodated in associated recesses (28) in the synchronizer body (14).

4. The synchronization unit according to claim 3, **characterized in that** the coupling component (30) includes a central extension (46) and/or extensions (40) directed radially inwards on its axial halves, which engage the synchronizer rings (18, 20), more particularly engage into recesses (52) of the synchronizer rings (18, 20).

5. The synchronization unit according to claim 3 or 4, **characterized in that** at least one synchronizer ring (18, 20) has at least one protruding claw (60) which grasps the coupling component (30).

6. The synchronization unit according to any of the preceding claims, **characterized in that** the synchronizer rings (18, 20) strike against the synchronizer body (14) in the circumferential direction for limiting the angle of transition during synchronization, or that the coupling component (30) strikes against the synchronizer body (14) in the circumferential direction for limiting the angle of transition during synchronization.

7. The synchronization unit according to any of the preceding claims, **characterized in that** the pre-synchronizing unit (26) includes a force transmission element (34) which is urged radially outwards by the spring element (32) and which engages into a groove (36) on the shifting sleeve (16) and initiates the axial displacement of the shifting sleeve (16) into the pre-synchronizing unit (26).

8. The synchronization unit according to any of the preceding claims, **characterized in that** the pre-synchronizing unit (26) includes locking toothings (38) on the coupling component (30) which are adapted to enable or disable an axial movement of the shifting sleeve (16) towards the speed change gears (22, 24).

9. The synchronization unit according to any of claims 1 to 7, **characterized in that** the pre-synchronizing unit is a locking wedge synchronization assembly having a synchronizer block which supports itself against the synchronizer ring in the radial direction, a spring element (32) which supports itself against the synchronizer block, and a locking block (72) which is urged radially against the shifting sleeve (16) by the spring element (32), the locking block (72) being adapted to enable or disable an axial movement of the shifting sleeve (16) towards the speed change gear (22, 24).

10. The synchronization unit according to any of the preceding claims, **characterized in that** the pre-synchronizing unit (26) couples the synchronizer rings (18, 20) to each other such that during axial displacement, the synchronizer ring (18, 20) that does not serve for force transmission is entrained via a contact surface (42) on the coupling component (30) and a mating surface on the synchronizer ring (18, 20) which extends at an angle of 60 degrees, at a minimum, relative to the axial direction, preferably substantially perpendicularly to the axial direction.

11. The synchronization unit according to any of the preceding claims, **characterized in that** the pre-synchronizing unit (26) includes a contact surface for each synchronizer ring (18, 20) and supports itself in the radial direction by means of this contact surface against a mating surface of the synchronizer ring, both the contact surface and the mating surface being inclined in relation to an axial direction such that, as viewed in the axial direction from the synchronizer body (14) towards the speed change gear (22, 24), their radial distance (s) from a gearbox axis (A) decreases, the contact surface and the mating surface more particularly being substantially parallel, so that the pre-synchronizing unit supports itself against the synchronizer ring in surface contact therewith.

12. The synchronization unit according to any of the preceding claims, **characterized in that** the pre-synchronizing unit (26), in particular the coupling component (30), and the synchronizer rings (18, 20) include stop surfaces (44), associated with each other, on an extension (46) of the pre-synchronizing unit that projects axially between the synchronizer rings (18, 20), for limiting an axial relative movement of the synchronizer rings (18, 20) and/or for axially coupling the synchronizer rings (18, 20).

13. The synchronization unit according to any of the preceding claims, **characterized in that** the pre-synchronizing unit (26) is radially spaced from the synchronizer body (14).

14. The synchronization unit according to any of the preceding claims, **characterized in that** the synchronizer rings (18, 20) each include a radial outer face which, as viewed in the axial direction from the synchronizer body (14) towards the associated speed change gear (22, 24), at first radially widens and then radially tapers, or vice versa.

15. The synchronization unit according to any of the preceding claims, **characterized in that** in a non-shifted neutral position of the gearbox, the two synchronizer rings (18, 20) are urged axially towards each other by the pre-synchronizing unit (26).

## Revendications

1. Unité de synchronisation d'une boîte de vitesses, comportant
un corps de synchronisation (14) qui est monté solidaire en rotation sur un arbre de boîte de vitesses,
un manchon coulissant (16) qui est agencé solidaire en rotation mais axialement déplaçable par rapport au corps de synchronisation (14),
au moins une bague de synchronisation (18, 20) pour coupler le corps de synchronisation (14) à un pignon de vitesse (22, 24) associé de la boîte de vitesses par une liaison par frottement, et
une unité de pré-synchronisation (26) qui s'engage sur le manchon coulissant (16) et qui sollicite la bague de synchronisation (18, 20) associée avec une force de commutation axiale contre le pignon de vitesse à coupler lors d'un déplacement axial du manchon coulissant (16),
l'unité de pré-synchronisation (26) retenant et positionnant la bague de synchronisation (18, 20) dans les deux sens axiaux opposés par coopération de formes,
deux bagues de synchronisation (18, 20) axialement opposées étant prévues pour coupler le corps de synchronisation (14) sélectivement à l'un de deux pignons de vitesse (22, 24) de la boîte de vitesses par une liaison par frottement, et l'unité de pré-synchronisation (26) couplant les deux bagues de synchronisation (18, 20) l'une à l'autre dans le sens axial par coopération de formes pour un déplacement axial commun,
un composant (30) rigide de l'unité de pré-synchronisation (26) qui couple les deux bagues de synchronisation (18, 20) étant prévu, et l'unité de pré-synchronisation (26) présentant au moins un élément ressort (32),
**caractérisée en ce que** ledit au moins élément ressort (32) sollicite le composant couplant (30) radialement vers l'intérieur.

2. Unité de synchronisation selon la revendication 1, **caractérisée en ce que** l'unité de pré-synchronisation et les bagues de synchronisation (18, 20) sont couplées l'une aux autres sensiblement sans jeu dans le sens axial et/ou dans le sens périphérique.

3. Unité de synchronisation selon la revendication 1 ou 2, **caractérisée en ce qu'**il est prévu plusieurs composants (30) qui sont répartis sur la périphérie du corps de synchronisation (14) et qui couplent les bagues de synchronisation (18, 20), et/ou le ou les composant(s) (30) qui couplent les bagues de synchronisation (18, 20) étant logé(s) dans des évidements associés (28) dans le corps de synchronisation (14).

4. Unité de synchronisation selon la revendication 3, **caractérisée en ce que** le composant couplant (30) présente une saillie médiane (46) et/ou des saillies (40) orientées radialement vers l'intérieur sur ses moitiés axiales, lesquelles s'engagent sur les bagues de synchronisation (18, 20) et s'engagent en particulier dans des évidements (52) des bagues de synchronisation (18, 20).

5. Unité de synchronisation selon la revendication 3 ou 4, **caractérisée en ce qu'**au moins une bague de synchronisation (18, 20) présente au moins une patte (60) en ressaut qui saisit le composant couplant (30).

6. Unité de synchronisation selon l'une des revendications précédentes, **caractérisée en ce que** les bagues de synchronisation (18, 20) butent dans le sens périphérique contre le corps de synchronisation (14) pour limiter l'angle de rabattement lors de la synchronisation, ou **en ce que** le composant couplant (30) bute dans le sens périphérique contre le corps de synchronisation (14) pour limiter l'angle de rabattement lors de la synchronisation.

7. Unité de synchronisation selon l'une des revendications précédentes, **caractérisée en ce que** l'unité de pré-synchronisation (26) présente un élément de transmission de force (34) qui est sollicité radialement vers l'extérieur par l'élément ressort (32) et qui s'engage dans une gorge (36) sur le manchon coulissant (16) et déclenche le déplacement axial du manchon coulissant (16) dans l'unité de pré-synchronisation (26).

8. Unité de synchronisation selon l'une des revendications précédentes, **caractérisée en ce que** l'unité de pré-synchronisation (26) présente des dentures de blocage (38) sur le composant couplant (30) lesquelles peuvent autoriser ou bloquer un mouvement axial du manchon coulissant (16) vers les pignons de vitesse (22, 24).

9. Unité de synchronisation selon l'une des revendications 1 à 7, **caractérisée en ce que** l'unité de pré-synchronisation est un ensemble de synchronisation à clavette de blocage, présentant un bloc de synchronisation qui prend appui sur la bague de synchronisation dans le sens radial, un élément ressort (32) qui prend appui sur le bloc de synchronisation, et un bloc de blocage (72) qui est sollicité radialement contre le manchon coulissant (16) par l'élément ressort (32), le bloc de blocage (72) pouvant autoriser ou bloquer un mouvement axial du manchon coulissant (16) vers le pignon de vitesse (22, 24).

10. Unité de synchronisation selon l'une des revendications précédentes, **caractérisée en ce que** l'unité de pré-synchronisation (26) couple les bagues de synchronisation (18, 20) de telle sorte que lors d'un déplacement axial, la bague de synchronisation (18, 20) ne servant pas à la transmission de force est entraînée par une surface de contact (42) sur le composant couplant (30) et une surface antagoniste sur la bague de synchronisation (18, 20) qui s'étend sous un angle d'au moins 60 degrés par rapport au sens axial, de préférence sensiblement perpendiculairement au sens axial.

11. Unité de synchronisation selon l'une des revendications précédentes, **caractérisée en ce que** l'unité de pré-synchronisation (26) présente pour chaque bague de synchronisation (18, 20) une surface de contact et prend appui dans le sens radial par l'intermédiaire de cette surface de contact sur une surface antagoniste de la bague de synchronisation, tant la surface de contact que la surface antagoniste étant inclinées par rapport à un sens axial de telle sorte que, vue dans le sens axial du corps de synchronisation (14) vers le pignon de vitesse (22, 24), leur distance radiale (s) par rapport à un axe de boîte de vitesses (A) diminue, la surface de contact et la surface antagoniste étant en particulier sensiblement parallèles de sorte que l'unité de pré-synchronisation prend appui sur la bague de synchronisation de manière plane.

12. Unité de synchronisation selon l'une des revendications précédentes, **caractérisée en ce que** l'unité de pré-synchronisation (26), en particulier le composant couplant (30), et les bagues de synchronisation (18, 20) présentent des surfaces de butée (44) associées les unes aux autres sur une saillie (46) de l'unité de pré-synchronisation qui se dresse axialement entre les bagues de synchronisation (18, 20) pour limiter un mouvement relatif axial des bagues de synchronisation (18, 20) et/ou pour un couplage axial des bagues de synchronisation (18, 20).

13. Unité de synchronisation selon l'une des revendications précédentes, **caractérisée en ce que** l'unité de pré-synchronisation (26) est radialement espacée du corps de synchronisation (14).

14. Unité de synchronisation selon l'une des revendications précédentes, **caractérisée en ce que** les bagues de synchronisation (18, 20) présentent chacune une face extérieure radiale qui, vue dans le sens axial du corps de synchronisation (14) vers le pignon de vitesse (22, 24) associé, s'évase tout d'abord radialement et se rétrécit ensuite radialement, ou vice versa.

15. Unité de synchronisation selon l'une des revendications précédentes, **caractérisée en ce que** les deux bagues de synchronisation (18, 20) sont sollicitées axialement l'une vers l'autre par l'unité de pré-synchronisation (26) dans une position neutre non-embrayée de la boîte de vitesses.
